# EUROPEAN PATENT SPECIFICATION

(11) **EP 2 100 682 B1**
(45) Date of publication and mention of the grant of the patent: **03.05.2023**
(21) Application number: 08004504.0
(22) Date of filing: 11.03.2008
(51) Int. Cl.: B23C 3/12, B24B 9/20, B29C 37/04, B29C 37/00, B29C 65/00, B29C 65/02, B29C 65/20, B29L 31/00

(54) **Window processing having inspection and compensation**
Fensterbearbeitung mit Prüfung und Kompensation
Traitement de fenêtre disposant d'une inspection et d'une compensation

(43) Date of publication of application: 16.09.2009
(73) Proprietor: GED Integrated Solutions, Inc., Twinsburg, Ohio 44087 (US)
(72) Inventor: McGlinchy, Timothe B., Twinsburg, Ohio 44087 (US); Williams, James B., Seville, Ohio 44273 (US); Shepherd, Robert R., Mogadore, Ohio 44260 (US); Jacot, Brady S., Stow, Ohio 44224 (US); Lewis, David F. Jr., Hudson, Ohio 44236 (US)
(74) Representative: Emde, Eric

(56) References cited:
- EP-B- 1 125 670
- DE-A1- 4 018 145
- US-A- 6 006 408

## Description

### Field of the Invention

The present invention relates to a profile recognition and finishing or cleaning of window frames or sashes constructed from plastic components.

### Background art

Plastic components that make a window frame or sash are typically welded together by miter cutting the components to size, heating the mitered ends and then pressing the heated ends together so that the melted ends bond to each other. This process often squeezes some of the material out from between the two pieces which creates a bead of material, commonly referred to as weld flash, requiring further processing to obtain better appearance as well as removing material which may interfere with further assembly of the window itself such as installing an IG unit into a sash or a sash into a frame.

Further processing can be accomplished using a corner cleaner, a machine that removes the weld flash by means of multiple types of tools such as saw blades, knives, end mills or router bits to cut or abrade away the weld flash where it is not desired. Variances in the dimensions of the profile material and/or misalignment of the two parts during the welding process hamper the ability of the machine to consistently remove the weld flash to controlled dimensions due to profile dimensions changing in the frame extrusion.

US-A-4,909,892 concerns an apparatus for simultaneously welding two or more pairs of thermoplastic frame elements. US-A-4,971,639 concerns a method and apparatus for welding vinyl window and door frames.

DE-A-40 18 145 discloses a trimming device for frames consisting of welded plastic profiles, said trimming devices being used for the removal of the weld bead projecting from the weld seam. To do so, a tool carrier accommodating at least one milling cutter is provided, said carrier being movable in the frame plane and perpendicular thereto in working position of the tool. In order to be able to machine profiles that are most commonly handled by the user, as well as profiles that occur less frequently. With one and the same machine the tool carrier additionally comprises a disk-shaped contouring cutter at an axial distance from the milling cutters, in which case all the tools are arranged on a common, motor-driven shaft. Considering profiles that are frequently used by the user, the milling cutters permitting rapid machining are used and, considering only occasionally occurring profile types, the disk-shaped contouring teeth cutter is used. Said latter cutter has, on its peripheral cutting teeth next to the peripheral cutting edges on its exterior sides, additional minor cutting edges extending in radial direction from the outside to the inside parallel to the disk plane, and has, adjoining said minor cutting edges, inside cutting edges that are inclined radially inward and diagonally with respect to the disk plane.

EP-B-1 125 670 discloses a cleaning device, and in particular, a welding bead cleaning machine, wherein a finishing device, especially a weld-bead finishing machine for processing preferably corner connections of frames composed of, especially welded together from, profile pieces comprises a plurality of processing tools accommodated in one or two magazine tool carrier(s) wherein the respective magazine tool carrier has at least one adjusting device for selective transfer of the processing tool from a starting position into a processing position and back, at least one frame for receiving the respective processing tool including magazine tool carrier as well as relevant adjusting device, a holder for receiving the tool carrier in the frame wherein the holder can be displaced in at least three directions so that a six-axis or multi-axis adjustment of the processing tool takes place.

US-A-6 006 408 discloses a vinyl weld seam cleaner having a fixed support head and a movable support head. The movable support head accommodates windows of varying widths. Each support head has an upper and lower machine that houses a tool head. The tool heads have interchangeable tools. The machine head and tool head cooperate together to allow tools on the tool heads to move in three dimensions. The tools can clean and machine at a 45° angle along a weld seam or at a 90° angle relative to the top, sides and bottoms of a window frame. The window frame is engaged by an inner conveyor belt that moves the frame into and out of the first cleaning position for cleaning and machining the top corners of the window frame, and into and out of a second cleaning position for cleaning and machining the bottom corners. The inner conveyor includes fixed and movable fences, tabletop back fences, and clamps. The top corners are simultaneously cleaned and the bottom corners are simultaneously cleaned. The tool heads present themselves at a 30° angle toward the window frame.

### Summary

The present invention provides a window processing system for use in fabricating window frames of sashes, as set forth in claim 1, and a process for treating window frames made up of multiple component parts fused together at a welding station to form a closed sided frame or sash, as set forth in claim 16. Preferred embodiments of the present invention may be gathered from the dependent claims.

A window processing system is disclosed for use in fabricating window frames. After welding at a welding station, a window frame or sash is moved to another processing station where weld flash is cleaned off the frame or sash.

The disclosed window processing system includes one or more cleaning tools. A cleaning tool is used herein to mean any tool for treating or processing by contact, with controlled regions of the frame or sash. Once a frame or sash is positioned at the cleaning station the cleaning tool or tools are actuated to move into a cleaning position relative to selected portions of a window frame or sash.

In accordance with one aspect of the disclosure, a monitor or sensor inspects a profile of the window frame or sash. A controller coupled to the monitor determines a type of window frame or sash based on a sensed profile. Movement of the cleaning tools is controlled to clean or process one or more specified locations of the window or sash based on the sensed profile.

When the window frame members or components are assembled at a weld station, the frame can experience some degree of mismatch or misalignment. Even though the two abutting members of a frame or sash match well, they may not be the same or a consistent dimension. This may cause the cleaning tools to take off too much or too little weld flash and degrade the appearance of the frame or sash. The exemplary system senses both misalignment and dynamically changing size and adjusts flash removal to take into account the specific configuration of the frame or sash.

Another aspect of the window processing system features a cleaning station having one or more cleaning or processing tools and a monitor for inspecting surfaces of a window frame or sash at the cleaning station. A controller has an interface coupled to the monitor for moving the monitor with respect to the window frame or sash as the monitor sends the controller co-ordinate information that characterizes the shape or profile of the surface of the frame or sash. The controller uses this data to direct movement of the one or more cleaning tools to clean specified one or more locations of the window or sash based on said sensed co-ordinates transmitted from the controller from the monitor.

These and other features of the system are disclosed in conjunction with the accompanying drawings.

### Brief Description of the Drawings

Figure 1 is an overview schematic block diagram of a window frame or sash processing system;
Figure 2 is a top plan view of a portion of a cleaning station;
Figure 3 is a flow chart of an exemplary cleaning process;
Figure 4 is a section view illustrating a frame profile signature;
Figure 5 is a perspective view of two assembled frame or sash members connected at a corner by welding;
Figure 6A and 6B illustrate inspection of different configuration frame or sash members;
Figure 7 is a perspective view of a cleaning station with certain components removed for ease in illustration;
Figure 8A and 8B illustrate cleaning of weld flash from a corner of a window frame or sash;
Figures 8C and 8D are enlarged section view of a region of engagement between frame members;
Figure 8E shows adjoining welded frame members wherein too high a region occurs on the inside of one frame member and too high a region occurs on an outside of frame on an abutting frame member;
Figure 9 is a side elevation view of a cleaning tool having a rotating head for contacting an interior profile of a frame or sash;
Figure 10 is a perspective view of an alternate cleaning station with an operator guard in place;
Figures 11 and 12 are perspective views of the alternate cleaning station of figure 10 with the guard removed;

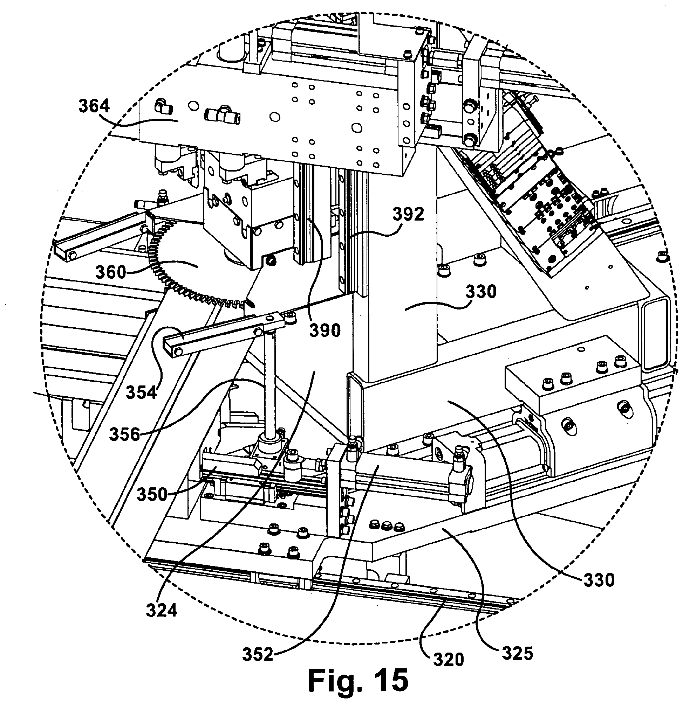

Figures 13 -15 are enlarged perspective view of one cleaning head of the alternate cleaning station;

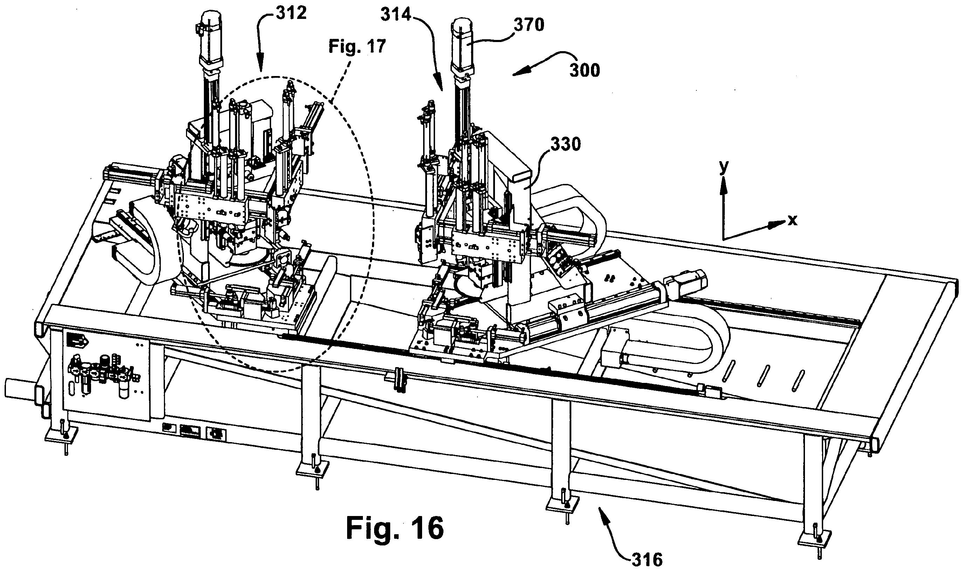

Figures 16 and 17 are perspective views of the alternate cleaning station with no frame or sash in place in a region of the cleaning heads; and
Figures 18 and 19 are visual depictions of a graphical user interfaces of a controller monitor used in setting up and operating the cleaning station.

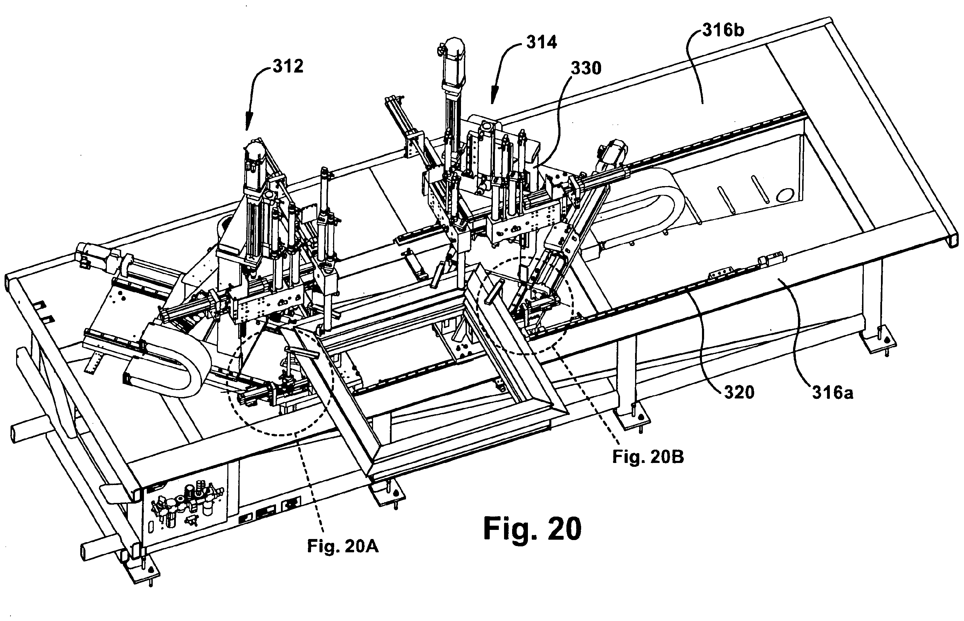

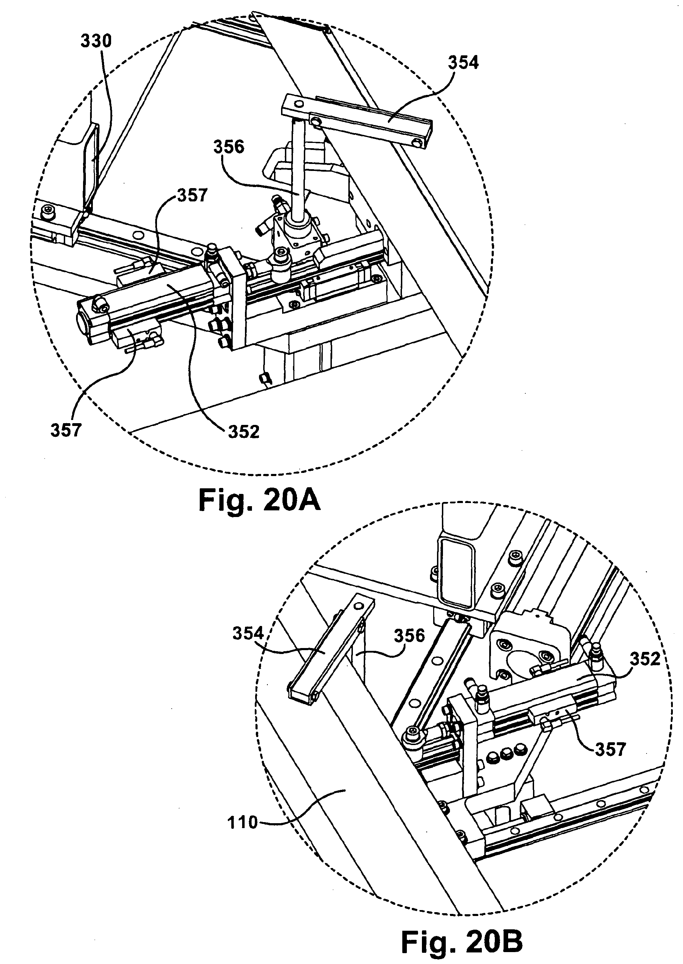

Figure 20 is a view similar to Figure 11 illustrating two spaced apart cleaning heads;
Figures 20A and 20B depict on an enlarged scale clamp arrangements;
Figure 21 is a perspective view on an enlarged scale showing an abrading knife for cleaning an under surface of a frame or sash;
Figure 22 is an exploded perspective view of a knife assembly for use with the exemplary embodiment; and
Figure 22A is an enlarged perspective view of an exemplary knife.

### Exemplary mode for practicing the invention

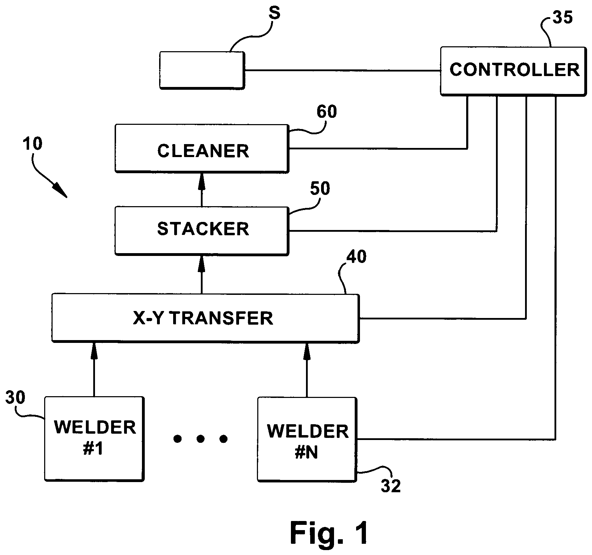

Figure 1 schematically depicts a window processing system 10 for fabricating window frames or sashes and includes multiple welding stations 30, 32. In one embodiment, one or more of the welding stations is a sash welding station and one or more additional stations are frame welding stations. Customary usage in the window fabrication business refers to a frame as a stationary part of the window and a sash as the moveable part of the window which moved to open the window.

Typically, each of the welding stations has multiple welding heads that are independently actuated to move into position relative the different parts of a widow frame. In the disclosed embodiment, each welding station can have multiple frames or sashes stacked on top of each other . The welding stations and other stations are controlled by a controller or controllers 35.

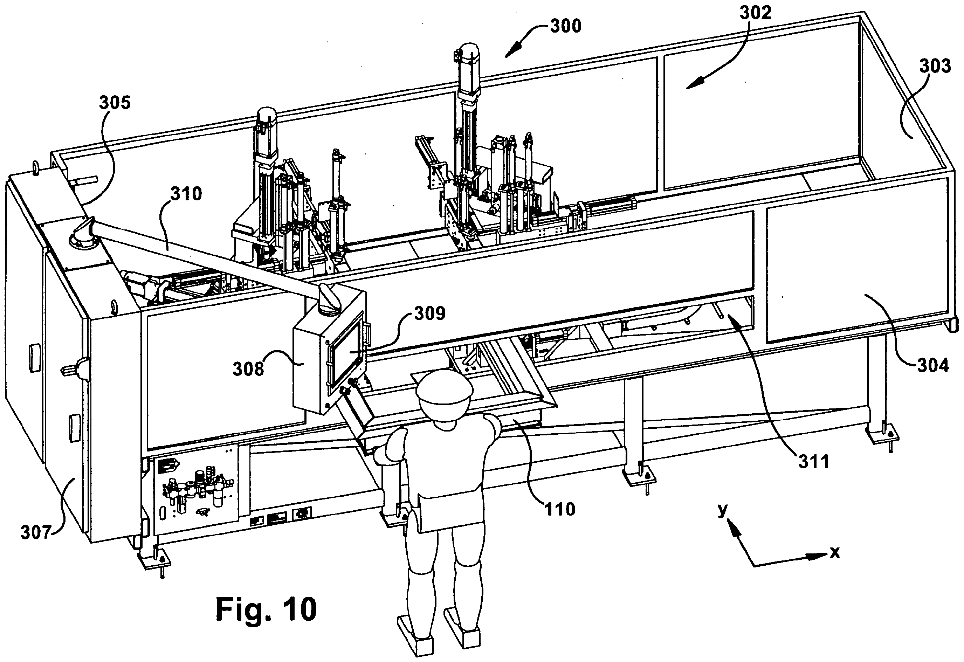

An X-Y transfer table 40 supports welded frames delivered by a weld station exit conveyor and includes a mechanism for moving welded frames to a multi-tiered buffer or stacker 50. The buffer accepts frames from the X-Y table and stores the frames in different stacker layers to await cleaning. In one embodiment, belts automatically move the frame into a cleaner at a cleaning station 60. As discussed below, in an alternate embodiment shown in Figure 10 the welded frame is moved by hand from a welding machine and placed into a cleaning unit.

### Cleaning Station

The cleaning station 60 has a plurality of cleaning tools that are independently actuated to move into a position relative to selected portions of the window frame. The controller 35 co-ordinates the operation of the welding heads at the weld stations, the conveyor which ejects welded frames from the welding stations and movement of the components to the x-y table through the stacker 50 to the cleaning station 60. In the exemplary embodiment, a profile of a welded frame or sash placed at the cleaning station is monitored by a sensor S. In one exemplary embodiment this is a visual sensor which can include a laser which scans along a line of the frame profile or a camera based sensor that images an entire region of the frame. Other alternate embodiments utilize tactile or touch sensors for determining a frame profile. In the exemplary embodiment the sensors is a visual sensor that monitors a profile of the frame or sash.

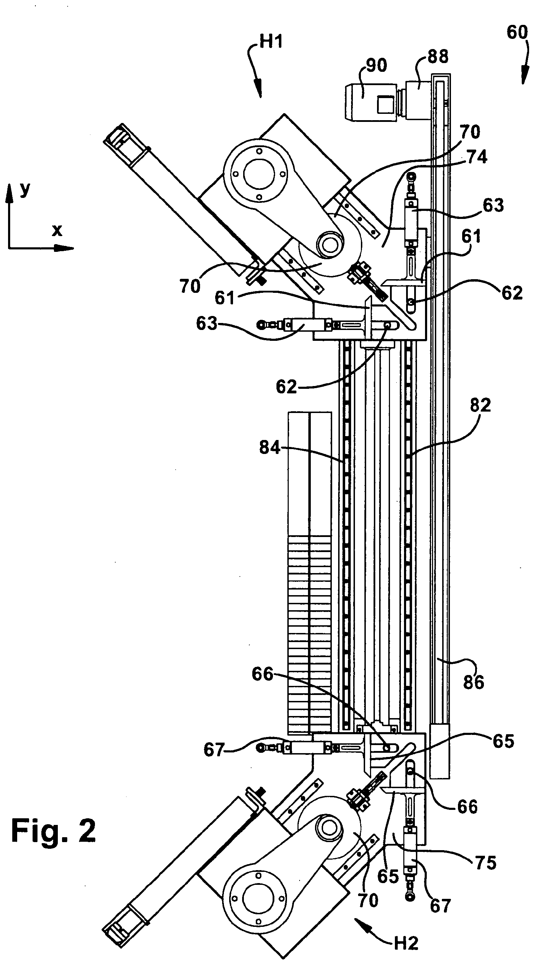

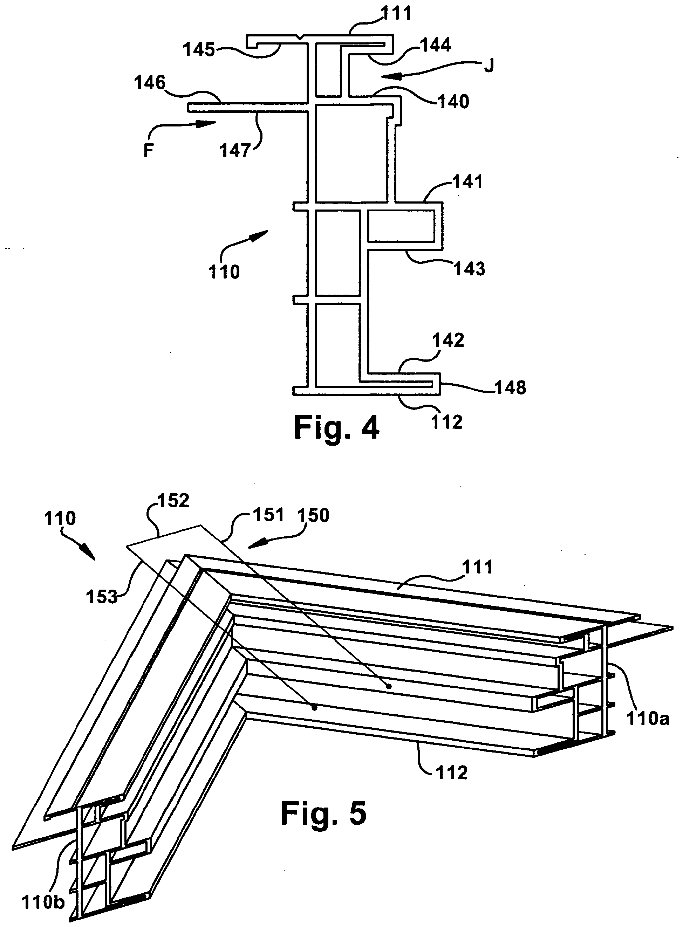

The cleaning station 60 shown in Figure 2 has two cleaning heads H1, H2. Each head includes a number of clamps and corresponding pins for fixing a frame 110 in place. The head H1, for example, has fixed clamps 61 that contact an outer surface of the frame in a region of one corner of a frame or sash. Corresponding pins 62 that are moveable by an air actuated cylinder 63 move back and forth to trap the profile of the frame in place for cleaning. In the disclosed embodiment, when it is clamped in place, the frame or sash 110 has top and bottom surfaces 111, 112 (Figure 5) that are oriented in a generally horizontal plane with respect to a shop floor. In the embodiment illustrated, the cleaning tools of the heads H1, H2 operate on two corners at a time. The head H2 has stationary fences 65, reference stops 66 and air actuated cylinders 67 that are operated by the controller 35 to trap a second corner of the frame or sash in place. After two corners are cleaned the clamps release the frame or sash and an operator or robot reorients the frame or sash for cleaning of other two corners.

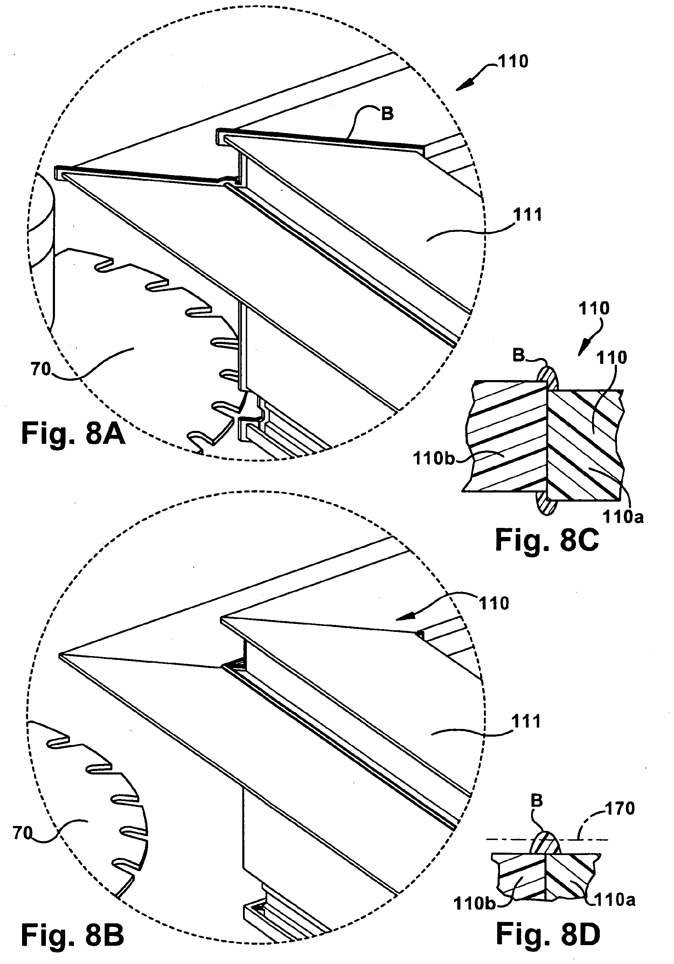

In the embodiment shown in Figure 2, the cleaning station 60 includes two saws having rotating circular blades 70 that are operatively coupled to the controller 35 and mounted at corner locations of the frame or sash to support plates 74, 75 which also supports the fences 65. As shown in Figures 8A and 8B, the saws move in and out to contact corner locations of the frame or sash 110 along an outer periphery. The saws can also contact and abrade away a bead B of weld flash on the top and bottom surfaces 111, 112.

The plate 74 corresponding to the head H1 is supported on rails 82, 84 which allow the plate 74 shown in Figure 2 to move back and forth in the y direction as defined by the co-ordinate axis of Figure 2.

Movement of the plate 74 back and forth in the y direction is achieved by a drive belt 86 reeved over a pulley 88 attached to a drive motor 90. By movement of the plate 74 in the y direction, the clamps and corresponding pins are positioned for proper engagement with the outer periphery of the frame or sash. Movement of the plate 74 is achieved by a user interface with a controller for activating the drive motor 90. Once the four clamps are engaged, the cleaning saw blades are moved up and down and in and out to abrade an outer surface of a clamped in place frame or sash 110.

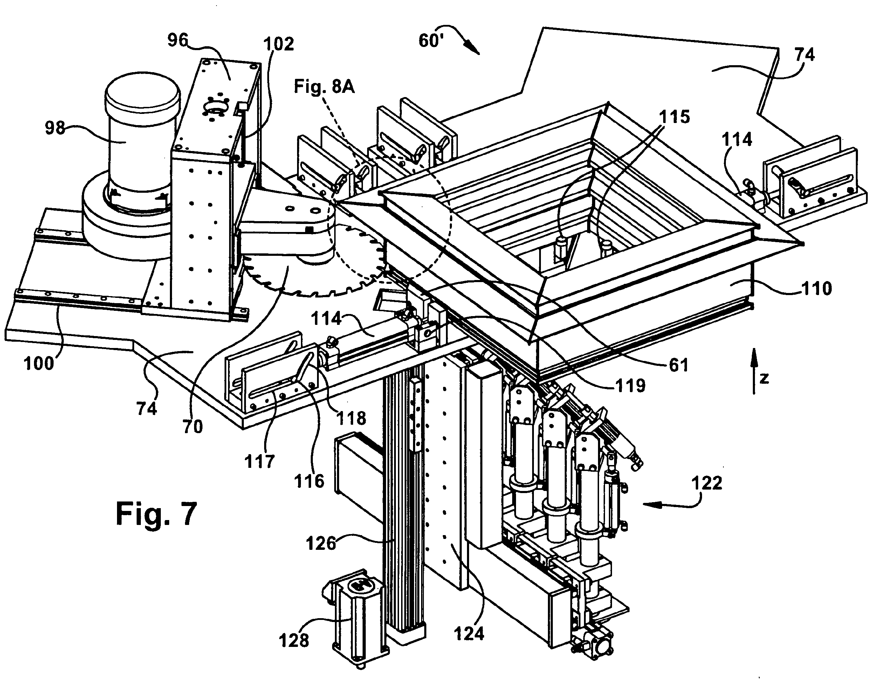

A perspective depiction of somewhat different cleaning station 60' is shown in Figure 7. Like the Figure 2 depiction, a saw blade 70 is shown positioned next to a corner of a window frame 110. A saw support member 96 supports both the blade and a motor 98 for rotating the blade. A track 100 mounted to the plate allows the support member 96 to move along the track at a forty five degree angle with respect to an outer periphery of the frame 110. An additional track 102 mounted to the support member 96 allows the saw blade 70 to be raised up and down along the z direction to abrade different regions of the outer periphery as well as the top and bottom surfaces 111, 112 of the frame 110.

The Figure 7 depiction also illustrates operation of the clamps and air driven cylinders for fixing the frame 110 in position. As an air actuated cylinder 114 moves a stop 115 back and forth under supervision of the controller 35, a pin 116 attached to a cylinder rod moves along a slot 117. As the stop nears its fully extended position, the pin 116 engages a raised portion 118 of the slot that pivots the stop about a pivot axis 119 downward out of the way so a frame can be placed against the fence 61.

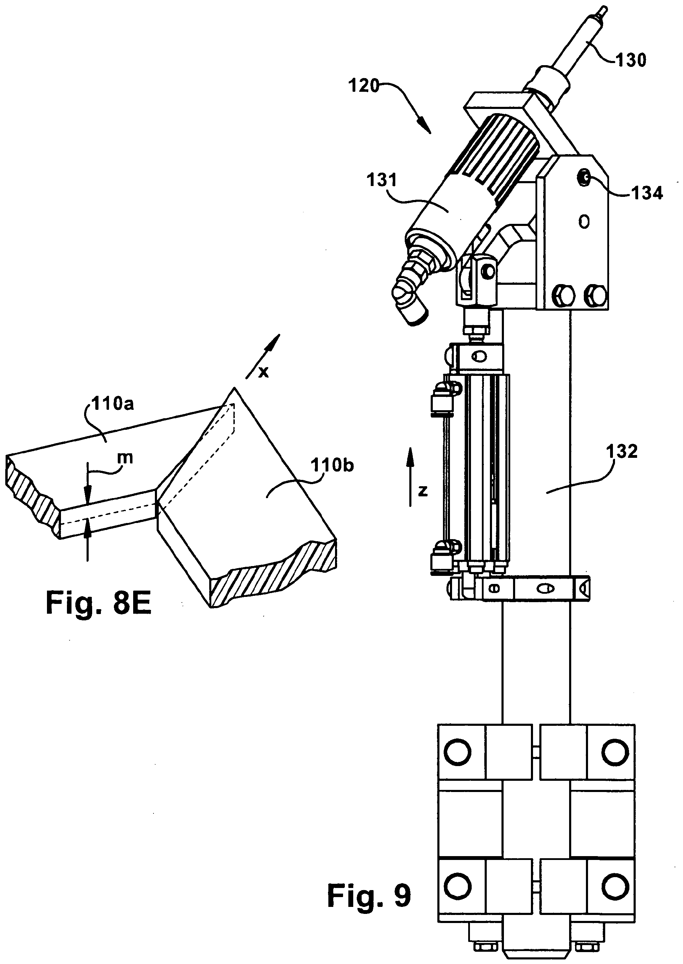

An additional tool 120 (Figure 9) is operatively coupled to the controller 35 for cleaning an inside periphery of the frame or sash 110. An array 122 of four such tools are aligned in the vicinity of the cleaning station 60' for movement into operative position relative the frame 110. Each tool has a different work implement for abrading cutting or scraping an inside of the frame to remove weld flash. An appropriate one of the four tools of the array 122 is chosen and attached to a vertically extending plate 124. The plate is attached to a ball screw drive 126 driven by a motor 128 so that the position of the tool 120 can be controlled in the z direction.

The tool 120 has a rotating head 130 coupled to an air motor 131 which can be oriented relative the frame in different orientations by rotating the head about a pivot axis 134. A tool support 132 is moved into position (in the z direction) and the head 130 appropriately oriented by rotating about the axis 134 which is generally horizontal. This rotating head can also be moved in and out in a generally forty five degree angle in the x-y plane to move the head into contact with the corner. In the cleaning station 60' depicted in Figure 7 each corner has two arrays of such tools, one positioned above the frame or sash and one positioned below the frame or sash. Once the frame or sash is clamped in place an appropriate tool can be brought into engagement with the top and bottom half of the frame simultaneously. Similarly, on another corner, other tool arrays (not shown) above and below the frame contain tools for abrading, scarfing, cutting etc the inside of the frame. In one exemplary embodiment the entire cleaning process for a frame can be performed on the order of 30 seconds or less.

### Teaching

There are many different frame and/or sash profiles that the cleaning station 60 must accommodate. In the prior art each different profile required an operator to enter on a console display the profile designation so the cleaning station would know the proper sequence of movements or steps used to clean a given frame or sash of weld flash.

In accordance with the exemplary embodiment, the profile is identified automatically by a sensor or monitor S mounted at the cleaning station 60 (60'). In one embodiment the sensor S is mounted to the tool 120 so that as movement of the tool brings a abrading tool into position relative the frame, the sensors is also brought into position for examining the frame or sash currently positioned at the cleaning station. To enable recognition of all available profiles, a profile training or teaching process must be performed.

Each frame has multiple recognition features on its outer surface. Turning to the frame depicted in Figure 4, in addition to the top and bottom surfaces 111, the frame includes other surfaces 140 - 147 all of whom are likely disrupted by weld flash at the frame corners that occur during welding. In this depiction for example, the surfaces 146, 147 define outer surfaces of a nail fin for attaching the frame to the structure and the surface 145 defines a lip that overlies siding. Similarly, the surfaces 140, 144 might define surfaces for bounding a screen and the surfaces 142, 143 might define surfaces that bound a sash.

In an exemplary embodiment, up to twenty points are calibrated, but more or less points are possible. The profiles of multiple frames and sashes are stored in a control system. In one embodiment the training process is performed using a laser beam so that the distance between the laser beam and a frame or sash surfaces are determined. Figure 5 illustrates a typical travel path 150. The path has segments 151, 152, 153 that allow the laser to examine and determine the z position (relative a fixed coordinate) of the surfaces illustrated in Figure 4. Use of the two spaced apart scan path segments 151, 153 allows the controller to determine a profile of two adjoining frame members 110a, 110b so that differences in profile between adjoining member is noted in classifying a frame or sash. In on embodiment, distance readings of the position of the surface of the frame with respect to a reference are obtained at a number of equally spaced recognition points and the number and spaced of these points is programmable by the operator.

Specificity in defining the profiles is a tradeoff with profile recognition speed. In one exemplary embodiment up to six points are located for each different frame type and used by the controller 35 in recognizing the profile. Although a laser sensor is presently preferred, video capture or tactile sensing is also contemplated for use with the invention.

A Profile Teach Program executing on the controller 35 interfaces with the laser sensor S which monitors return signals from the surface of the frame 110 to determine the position of all recognition point locations ( a maximum of twelve in one embodiment) and records the measured value for each profile. This creates a finger print of each profile which is stored in controller memory. The Profile Teach Program also allows a user to enter ranges of acceptability for each reading. The user interface presented by the controller also has the ability to bypass one or more of the recognition points for any profile.

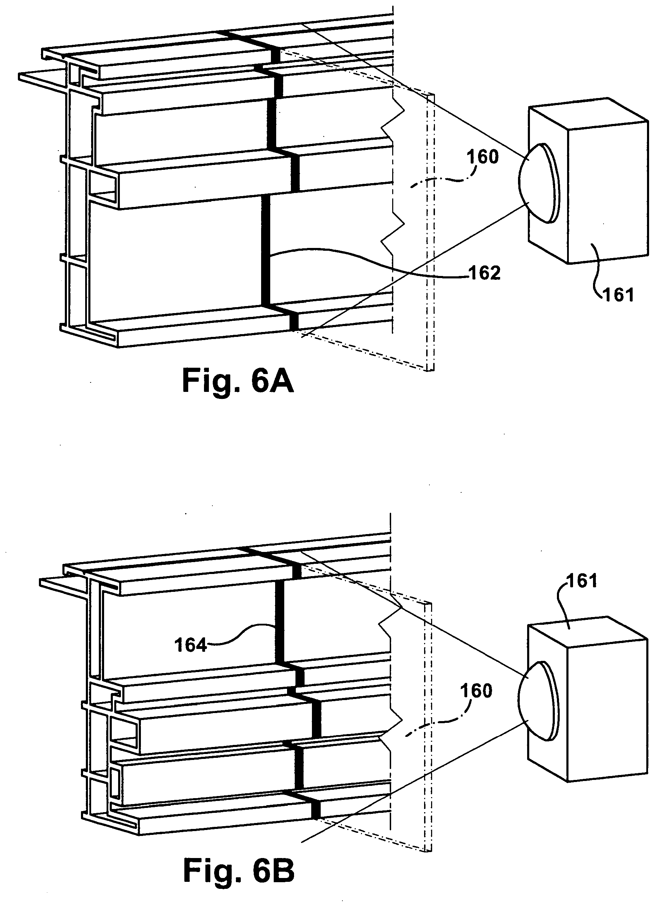

Figure 6A and 6B illustrate an alternate image capture based process in accordance with the invention. Two frames having two different profiles are shown in these depictions. During classification each frame is scanned by a laser beam 160 to create a reflected image 162, 164 that corresponds to an image of the inner profile of the frame. This image can be captured by an appropriate image capture device such as a camera 161 having appropriate imaging resolution. This data from the image capture device is fed to the controller and used to define the positions of the frame's defining surfaces for use in subsequent cleaning.

Once the Profile Teach Program learns the finger print of a profile, the controller 35 prompts the user to position the laser sensor to the points of interest that will be used to alter the cleaning process performed at the cleaning station. This step of adjusting the cleaning is referred to as compensation. There can be just one or many compensation points. These points will be measured every time the corresponding profile has been identified. A compensation point may also simply use the data from a recognition point.

Like the method used in the prior art, a user next teaches the controller how to clean the profile by selecting tools from the array 122 and manually cleaning the part by jogging the tools in the required motions. Similarly, the saw 70 is moved relative to the outer periphery of the frame to teach the controller how to clean this portion of the frame.

During this process the user stops at each point in the path of cleaning tool motion and uses the current tool positions to directly transmit data to the controller 35 needed to create a nominal tool path routine for that frame or sash profile.

During this process the user may select compensation points to link to the points of motion. The user can select which axis is affected (this will typically be a vertical shift). The user can also select multiple points which can be averaged and the result linked to selected motion points.

### Teach inspection

In a manner similar to the compensation teaching the laser sensor S will be jogged into position such as an inside corner to inspect for a piece of trimmed weld flash remaining.
An inspection could also be performed by recording the min and max readings as the laser sensor is moved laterally across the cleaned joint between the two adjoining frame members. Ideally this variance is minimized by the cleaning process.

### Cleaning Compensation.

Consider now the depictions of Figure 8C and 8D. In Figure 8C a mismatch between adjoining frame members 1 10a, 110b has occurred. In this depiction a top surface of the member 110b is higher (in the y direction) than a top surface of the member 1 10a. A preferred response to this situation is to abrade the corner of the frame until the bead B is worn down to the top surface of the member 1 10b. An uncompensated cleaning process might clean by abrading to the average of the two surface levels or worse might abrade to the top surface of the member 110a. Turning to Figure 8D, a situation is depicted wherein the frame members 110a, 110b match along a top surface at the abutment corner, but have a slightly smaller width than their specification calls for. Uncompensated the cleaning tool will clean as though the frame had a top surface 170 so it leaves part of the bead B in place. By compensating for individual frame variations, the cleaning tool abrades to the actual top surface of the frame feature and neither leaves weld flash it should remove or cleans too much to take off a surface of the frame as well as the weld flash.

Figure 8E illustrates an addition situation that needs a special abrading process if the best solution to the illustrated mismatch is to be achieved. Note, the bead has been deleted from this depiction for ease in illustration. Each of the two members 1 10a, 110b has a slight tilt (exaggerated in the depiction) with respect to the other. Note, one or the other might be level in the x-y plane or both could be tilted with respect to that plane. In either event the movement of the abrading tool must be adjusted during movement from the inside to the outside and made to come into contact with only one or the other of the two frame members as the tool is moved along the x direction. Stated another way, on the inside of the frame the abrading should occur on the frame member 110a starting with a maximum amount of abrading M (the mismatch) and proceeding linearly a lesser amount until reaching approximately the mid point of the frame. If the frame member 110b is level, then this will be achieved by a simple x direction movement of the tool until a midpoint of the frame is reached. This abrading is followed by a side gradual downward movement (y direction) that brings the tool into contact with the abutting frame element 110b so that it can be worn away to match the surface of the frame 1 10a. Assume the frame component 110b is level, then without this downward movement there would be a mismatch between the two components 1 10a, 110b.

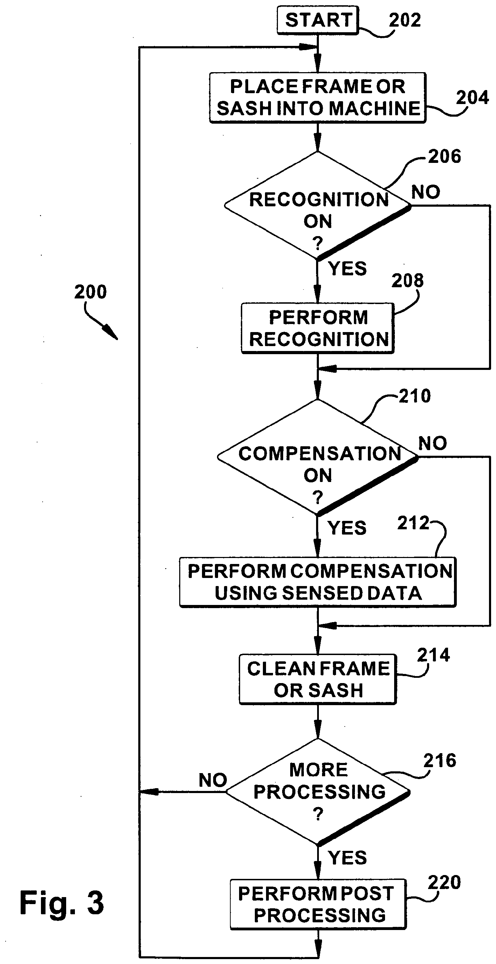

The flowchart 200 of Figure 3 illustrates in an overview way, a process of cleaning that begins when the controller 35 is activated or started 202. A frame or sash is placed 204 into one of the alternate cleaning stations 60, 60', 300 and clamped in place. If the controller 35 determines 206 that frame recognition has been turned on by the user, the controller 35 performs a recognition stage or step 208. The controller then determines 210 if compensation is turned on. If so, the controller performs a compensation routine 212 as the frame is cleaned 214. In one exemplary embodiment of the invention, the same sensing by the sensor S is used to recognize or identify a frame or sash profile as well as determine how to perform the compensation. Stated another way, only one pass of the sensor S relative to the frame or sash profile is needed to both determine the profile and to obtain data points for adjustment during compensation.

Once the frame or sash has been cleaned, the controller 35 checks to determine 216 if post processing is turned on. If post processing is turned on, the controller inspects the cleaned frame to determine whether the frame or sash has been cleaned within an acceptable tolerance. Post processing 220 is performed with the aid of the sensor which images the corners and allows the controller 35 to evaluate the acceptability of the cleaning by comparing the cleaned product with standards regarding the final finish of the cleaned product. If the product inspection fails, the controller can direct the tools to touch up the cleaning process or may merely designate the product for additional processing without actually performing the subsequent cleaning. Whether or not the product undergoes post cleaning processing, the frame or sash is removed or re-oriented and another frame comers placed into the cleaning station for processing.

The option of turning on and off compensation and recognition is to enhance throughput. If for example a run of many identical frames or sashes is being cleaned perhaps recognition is turned off with the caveat that compensation would still check to assure compensation limits are not exceeded. If the particular frame or sash is not subject to variation in configuration, the cleaning compensation can also be turned off.

The process of determining a particular frame type or style involves storing nominal frame dimensions with respect to a reference position for each frame and then comparing a sequence of sensed positions, again with respect to the reference position for the frame or sash under examination. The tolerance level for deviations is in one exemplary embodiment made to depend on the location of the sensed point. In one embodiment, for example, a region on the fin F (Figure 4) is determined to match with a reference point already stored in controller memory if the sensed point in the z direction is within + or - 6.35 mm (¼ inch) of the reference. In the region of the J channel J, the sensed point is determined to agree if the sensed point is within + or - 3.18 mm (1/8 inch). These dimensions are illustrative only but do represent suitable parameters for recognition using the system.

### Alternate Cleaning Station 300

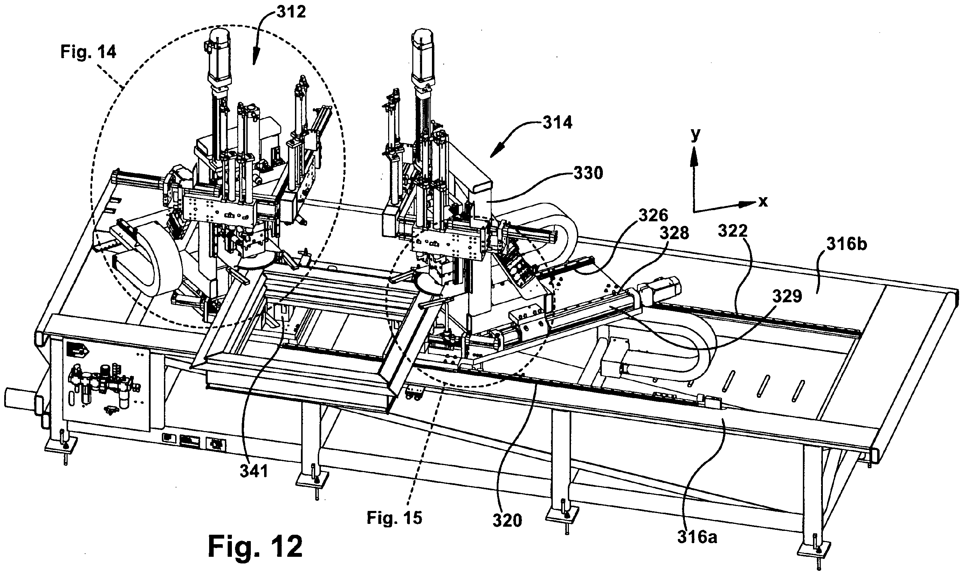

An alternate exemplary cleaning station 300 shown in Figures 10 - 12 has a shield 302 that defines an interior region bound by shield walls 303 - 306 that can be removed for cleaning station maintenance. A cabinet 307 at one end of the station 300 supports a computer controller 35 that communicates with a viewing monitor 308 having a touch screen 309 for accepting operator commands. The viewing monitor 308 is mounted at one end of an adjustable arm 310 which can be pivoted to selectively position the viewing monitor 308 in relation to the cleaning station 300. An opening 311 in the side wall 304 allows the operator to insert a frame or sash 110 that has been moved to the cleaning station 300 from a weld station onto a support for cleaning.

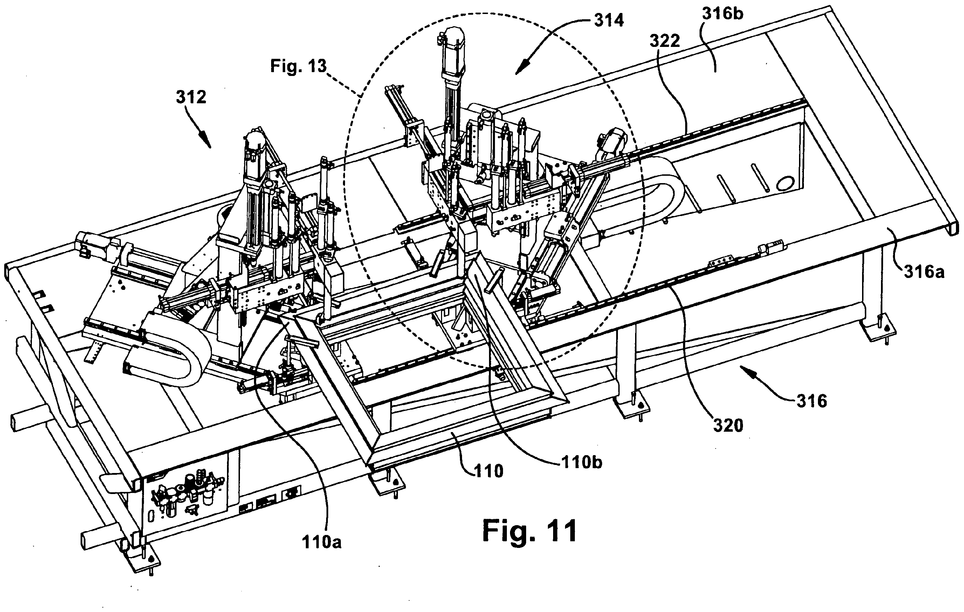

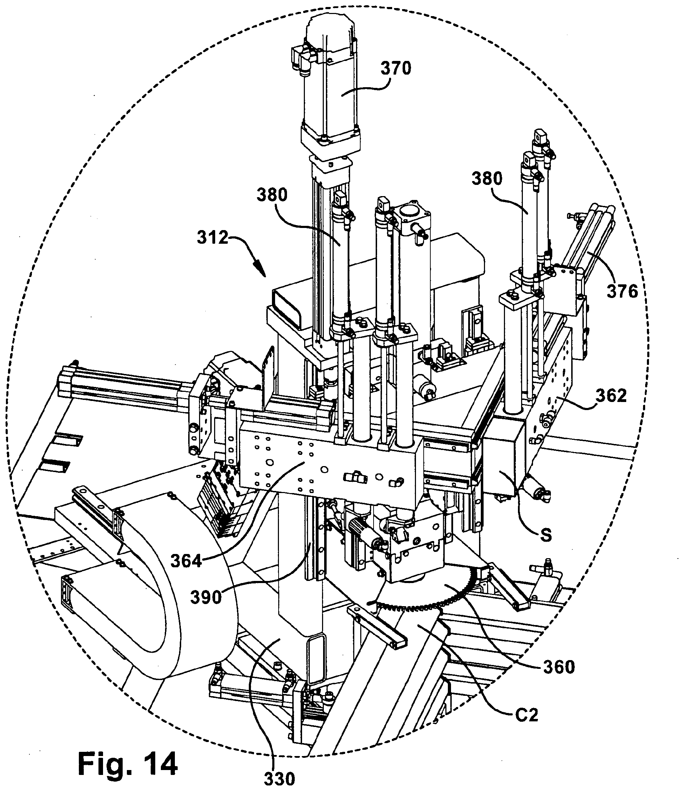

Two cleaning heads 312, 314 supported by a stationary frame 316 (Figure 11) have a number of clamps for fixing a frame 110 in place prior to cleaning. The head 312 is fixed in relation to the stationary frame 316 and includes movable clamps that contact an outer surface of the frame or sash in a region of one corner 110a (Figure 14) of a frame or sash 110.

The second cleaning head 314 moves back and forth along a set of parallel tracks 320, 322 supported by elongated frame members 316a, 316b under control of the controller 35. Movement of the head 314 on these tracks allows the cleaning station 300 to accommodate different size frames or sashes for cleaning by adjustment of the separation between the two heads 312, 314. In this disclosed embodiment the controller 35 includes an industrial computer which presents a user interface and a programmable logic controller (PLC) that accepts signals from the computer to clamp the frame as well as manipulate cleaning tools. One suitable PLC motion controller is model number X20CP1485 commercially available from B & R automation.

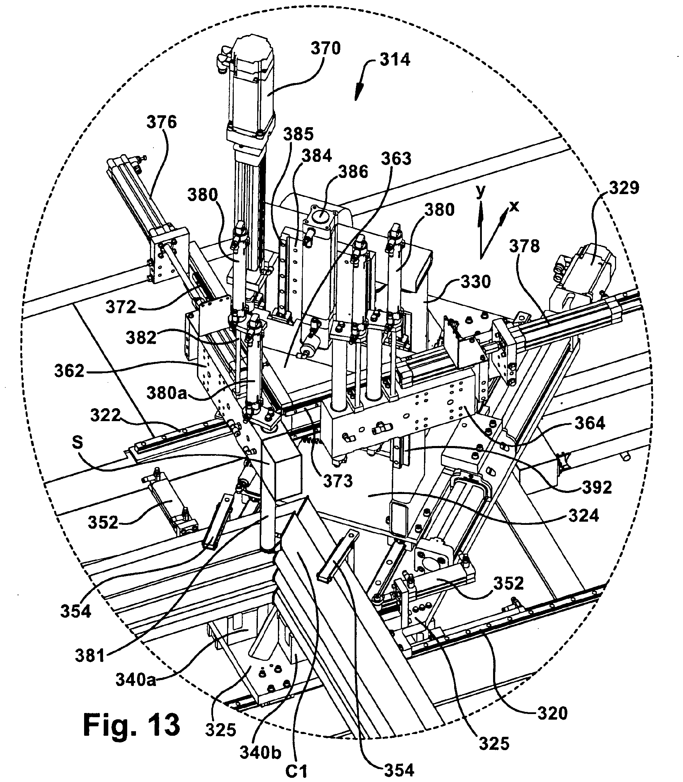

Figure 13 is an enlarged perspective view of the movable cleaning head 314 that cleans a corner region 110b. The head 314 is mounted to a movable, generally horizontally oriented support plate 324 which in turn is mounted to a movable base 325 that moves along the two tracks 320, 322. The base 325 is connected to a drive (not shown) coupled to the controller 35 for moving the base 325 back and forth to adjust separation of the heads. The plate 324 moves on two guides or tracks 326, 328 ) coupled to the base. These two tracks run parallel to an x direction of the head as defined in Figure 13. This x co-ordinate is one parameter the controller 35 can adjust for the individual cleaning tools that make up the head 314.

A servo drive 329 moves the plate 324 and hence the head back 314 back and forth in the x direction (along these guides 326, 328) to position the cleaning head in relation to a corner regionC1. Extending upwardly in the y direction from the plate 324 is a support carriage 330 made up of multiple interconnected tubular support members. This support carriage moves with the plate 324 as the servo drive 329 is actuated by the controller.

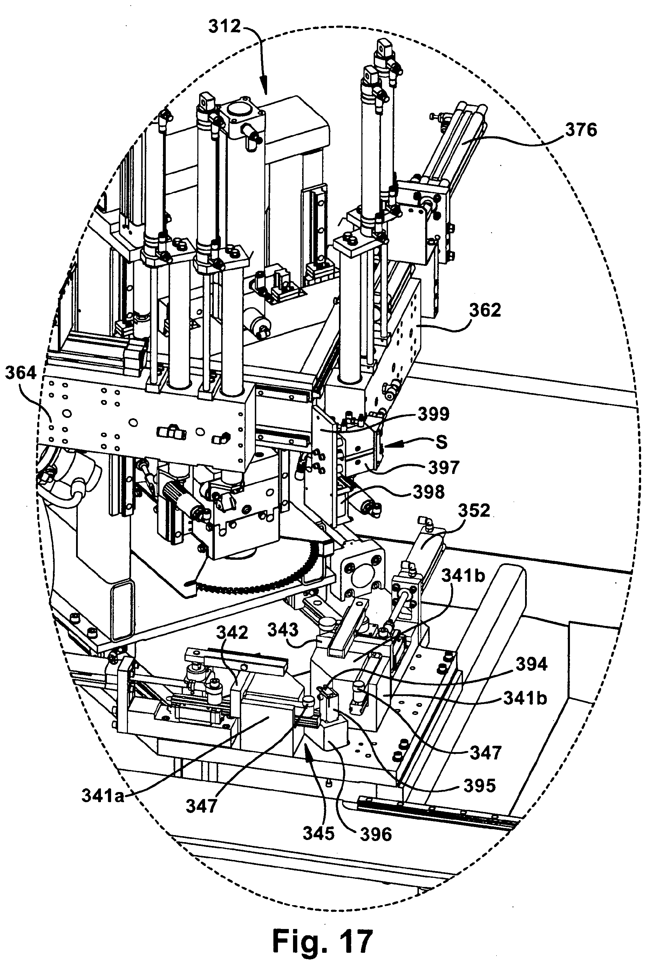

When moving the frame or sash into position, the controller retracts the head (in the x direction) and the operator places the frame or sash against corner supports or rests 340a, 340b (Figure 13) , 341a, 341b (Figure 17) at the two corners of the frame to be cleaned. Note, the rests 340a, 340b beneath the corner region C1 are movable with the base 325 while the supports or rests 341a, 341b beneath the corner region C2 are stationary and supported by the frame 316. The frame or sash 110 is stationary with respect to the elongated beam 316a of the frame 316. In the disclosed embodiment, when clamped in place, the frame or sash 110 has top and bottom surfaces that are oriented in a generally horizontal plane with respect to a shop floor. In the embodiment illustrated, the cleaning tools of the heads 312, 314 can simultaneously clean the two frame corner regions C1, C2 at the same time.

Each head has two movable side gates or clamps 347 (Figure 17) for engaging inner frame surfaces 148 (see Fig 4) once the frame has been placed onto the corner rests at the cleaning station 300. Elongated arms 350 extend through grooves in the corner rests on which the frame 110 is supported. As shown in Figure 17 one rest component 341a has an abutment 342 and a second rest component 341b has a second, perpendicularly oriented abutment 343 . Similar abutments are formed by the rests 340a, 340b at the region of the other frame corner. The arms 350 are coupled to air actuated cylinders 352 that are operated by the PLC. Clamps 347 coupled to the arms trap the first and second corners of the frame or sash in place against the abutments 342, 343.. The clamps 347 have rotatably mounted cam members which can rotate when an inner surface of the frame 148 (Figure 4) is clamped by activation of the air cylinders 352.

Arm clamps 354 that contact a top surface of the frame are maintained in a raised and pivoted position relative the support rests 340a, 340b, 341a, 341b as the frame 110 is moved into cleaning position. Each of the arm clamps has an associated air driven cylinder coupled to an associated actuator 356 to move the clamp into contact with an upper surface of the frame. In an exemplary embodiment, each corner region C1, C2 has two such top arm clamps 354 extending along the x direction contacting top surfaces of adjacent frame components that meet at the frame corner. After two corners are cleaned the arm clamps 354 and side clamps 347release the frame or sash and an operator (or robot) reorients the frame or sash for cleaning of its other two corners. Movement of the side clamps is monitored by LVDT sensors 357 mounted to monitor movement of an internal drive mechanism of an associated drive cylinder 352 which extends and withdraws the clamps 347.

In the embodiment shown in Figure 13 and 14 each of the heads includes a saw assembly having a rotating circular blade 360 operatively coupled to the PLC and mounted at corner locations of the frame or sash and supported for up and down and in and out movement by the support carriage 330. The saws move in and out (x direction) and up and down (y direction) to contact corner locations of the frame or sash 110 along an outer periphery. The saws can also contact and abrade away a bead B of weld flash on the frame top and bottom surfaces.

Additional tools at each of the heads are operatively coupled to the controller 35 for cleaning either an inside or an outside surface of the frame or sash 110. Four such tools are positioned at each cleaning head for controlled movement near the corner region of its respective head. Each tool has a different work implement for abrading, cutting or scraping a frame surface to remove weld flash. In one embodiment, only one tool is used to abrade each frame corner at a time. An appropriate one of the four tools is chosen (typically as part of a user programmed regimen)and moved first in the x direction to an appropriate position and then in a y direction into juxtaposition with the frame. In alternate embodiments, multiple tools can treat a frame or sash corner simultaneously.

Turning to figure 13, these four additional tools are mounted to one of two tool blocks 362, 364 that move independently from each other in generally perpendicular directions and are supported by a tool support 363 mounted for up and down movement in the y direction.. Four exemplary tools might include an air driven router bit, a vertical operating knife, a horizontal operating knife, and a drill. In figure 13 the tool block 362 is moved into operative position by first moving the support assembly 330 to an appropriate x co-ordinate and then causing the tool block 362 to move along a track 372 by activating an air cylinder 376 having an output shaft connected to the support 372. Extending the output shaft of the air cylinder 376 moves the support 362 in a direction at a forty five degree angle with respect to the x direction to a controlled position with respect to the support assembly 330. In this position, the controller actuates an appropriate one of four air actuated cylinders 380 having output shafts 382 that can be drawn into the cylinder to extend an associated tool downward in the direction as shown in Figure 13.

Figure 13 shows one particular cylinder 380a mounted to the moveable tool block 362 in an actuated state so that a vertically extending tool support 381 is extended downwardly toward the frame region C1. In particular, , the individual tool support 381 can extend to a position that its associated tool is brought into close relation with designated inner surfaces of the frame.

The tools mounted to tool blocks 362, 364 are connected to a tool support 363 whose vertical position is adjusted by a servo drive 370 for positioning the support 363. A vertically oriented plate 384 is coupled to the support 363 by a track 385 for guiding up and down movement of the support plate. The saw assembly is coupled to the support plate 384 and upon actuation of a drive cylinder 386 the saw assembly moves in relation to the assembly 330 a controlled amount. The tool supports are also mounted to a track that runs horizontally along a front surface of the tool support 384.

The fixed or stationary cleaning head 312 is similar in construction regarding the saw and additional tool sets. Like reference characters have been used to depict like elements in Figures 14 and 17.

Once the frame or sash corners are clamped, an appropriate tool of the head 314 can be brought into engagement with the frame corner region C1 simultaneously as the other head 312 is treating the corner region C2. In one exemplary embodiment of a cleaning station the entire cleaning process for a frame can be performed on the order of 30 seconds or less.

### Bottom knife 394

Figures 17, 21 and 22 depict a knife 394 used to abrade a bottom surface 112 (for example) of a frame or sash positioned at the cleaning station 300. This knife is replaceable as are the other tools. The position of the knife in the x direction is controlled by a separate independently actuated air cylinder which moves a knife support 396 causing the cutting edge of the knife to scrape across a bottom surface 112 of the frame 110 from the inside to the outside of the frame.

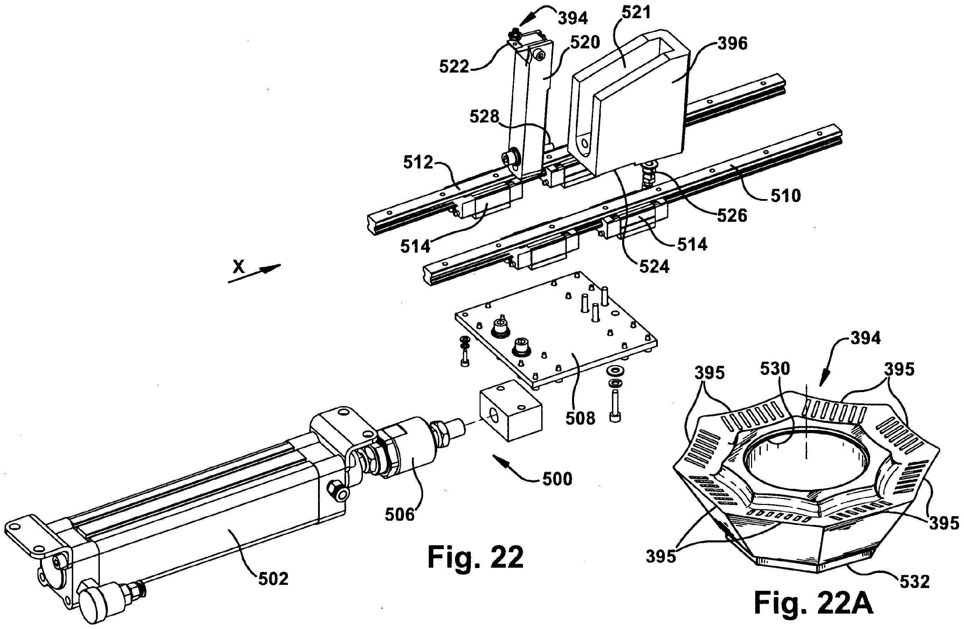

The knife 394 (Figure 22A) comprises a carbide cutter that has eight cleaning surfaces 395 so that as the knife wears a different one of these eight surfaces can be chosen to abrade the bottom corner surface of the frame or sash. Figure 22 shows a blade assembly 500 that supports the knife 394.

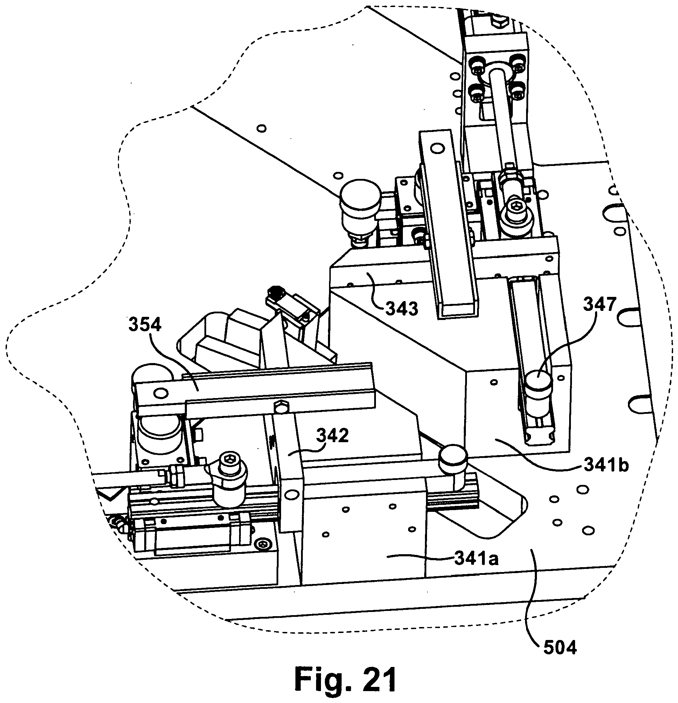

The assembly 500 includes an air cylinder 502 attached to a base plate 504 shown in Figure 21. The cylinder output is coupled through an alignment coupler 506 to a plate 508 which moves back and forth on rails 510, 512 coupled to the base plate 508 by bearings 514. The plate 508 is connected to the support 396 so that movement back and forth in the x direction causes the knife to move across and abrade the frame or sash. In the exemplary embodiment, this movement constitutes a full range of travel of the cylinder 502 but could be accomplished with a drive whose position is controlled in smaller increments.

The knife support 396 includes a notch 524 in its bottom surface that mates with a front portion of the plate to position the knife 394 in the x direction. A vertically extending column 520 fits into a slot 521 of the support 396 and supports a removable knife plate 522 on its top. The knife 394 has eight knife cutting surfaces 395 as depicted in Figure 22A. In use, the knife is attached to the knife plate by threading a connector into the plate 522 through an opening 530 in the knife 394. To allow the knife blade cutting surface to be re-oriented, the connector is loosened and a different one of the eight surfaces oriented into position for cutting. To prevent the knife from rotating in use, the knife has surfaces 532 that abut a notch in the plate 522.

An up and down position (y) of the knife is accomplished by a threaded bolt 526 that passes through a bottom of the support 396. An end of this bolt contacts the column and by rotating the bolt the column 520 is raised and lowered. A post 528 that extends through the column rides in an interior slot of the support 396 to accommodate this up and down movement. The exemplary knife is commercially available from Seco and although the exemplary knife has eight cutting surfaces other configuration knives could be utilized.

### Sensor movement

In a preferred embodiment, the sensor S is a laser sensor 398 such as model number ILD 1700-200 Micro Epsilon Laser optical displacement sensor mounted at one end of a tool block of each cleaning head. As the controller moves the sensor, it emits light which bounces off a target region of the frame. In the cleaning station 300, the two heads 312, 314 have a sensor S that is mounted to the tool block 362 and moved into position above the frame by the air cylinder 376. Once in position, proper x and y actuation of the support assembly 330 by energization of the servos 329, 370 causes the sensor to move in precise increments along a controlled path. As seen in figure 5, one sensor sequence of movements with respect to the frame 110 causes the sensor beam to follow generally linear paths 151, 152, 153. The movements along the paths 151, 153 are achieved through controlled actuation of the servo 329 and an air cylinder 397.

A side shift along the path 152 is achieved by actuation of a cylinder drive 397 coupled to a support plate 399 to which the sensor 398 is mounted. The extent of this direction shift is typically 6.35 to 19.05 mm (¼ to ¾ inches) but could be more or less than this range.

The cleaning stations constructed in accordance with the various alternative embodiments operate in different cleaning modes as outlined in tables 1, 2 and 3.

**Table 1**

| Machine Mode | 1 | Manual |
|---|---|---|
| | 2 | Semi_Auto (single step) |
| | 3 | Auto |

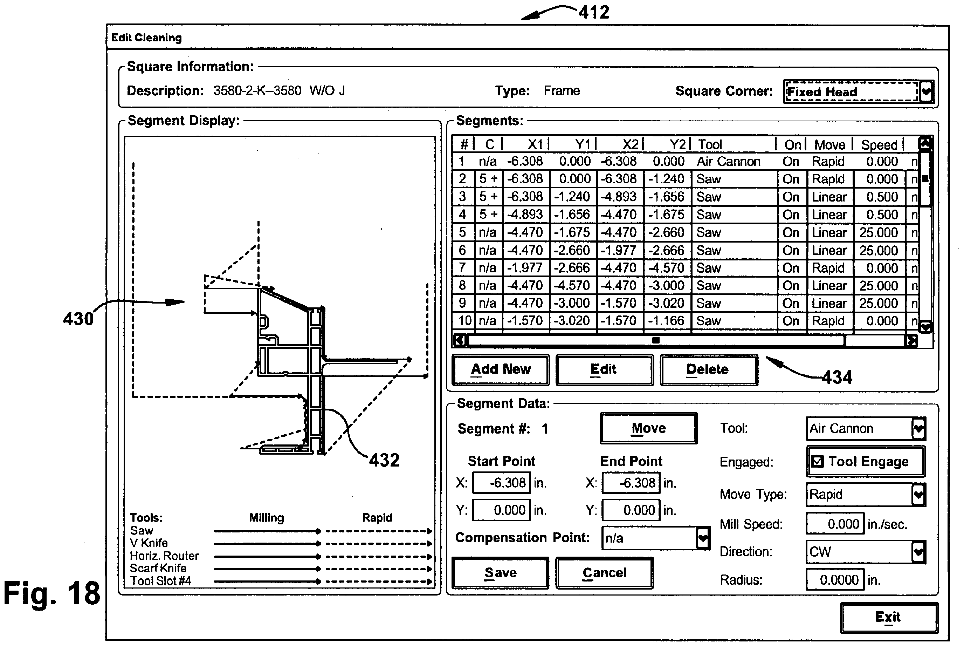

During set up of the cleaning station, representative frames or sashes are placed into the station between the two heads and an operator forms a profile of the region of the sash to be cleaned by moving an appropriate tool into contact with the frame at spaced locations along a travel path and capturing the position of (x and y co-ordinates) of the tool. As the operator moves the tool using either a joystick or a touch screen on the monitor, the path of movement is displayed on a region 430 of the viewing or user monitor (see Figure 18) depicted in the screen shot 412. This viewing set up procedure is performed in manual mode and allows programming of the tool to follow a proper cleaning sequence during production. The graphical depiction illustrates multiple cleaning paths 432 followed by an appropriate tool next to a profile of the particular frame that has been identified either automatically or entered by the operator. Another region 434 of the screen shot 412 lists start and end co-ordinates (x1, y1 = start, x2, y2 = end) in relation to a coordinate origin of the movements depicted on the screen as well as characteristics of the tool movement.

In semi-automatic mode, the cleaning head moves a tool along a path to clean one surface at a time and then stops and awaits user retraction. The user activates the next cleaning step and an appropriate tool moves into place and follows a next prescribed path. This mode is used for example to evaluate the effectiveness of a cleaning regimen for a particular frame profile.

In Automatic mode, the frame or sash 110 is placed on the support rests 340, 341 and the operator activates the cleaning process so that each head proceeds to clean its associated corner without operator intervention. Once the two corners have been cleaned, the controller unclamps the frame or sash and the user manually removes it and either retrieve another frame or reorient the just cleaned frame for insertion back into the station for cleaning of two additional corners.

**Table 2**

| Program Mode | 0 | Continuous |
|---|---|---|
| | 1 | Alternating |
| | 2 | Short mode, continuous, single head |
| | 3 | Short mode, alternating (auto side switching), single head |
| | 4 | Short mode, continuous, dual head |
| | 5 | Short mode, alternating, dual head |

In the continuous or batch mode of operation, the cleaning head processes the same two corners of the frame or sash on each item frame moved to the cleaning station. In an alternating mode, the operator places the frame or sash for cleaning, activates the cleaning of two corners, withdraws the frame or sash and then re-orients that frame or sash for immediate reinsertion into the station for cleaning the frame's additional two corners.

For most of the commonly encountered window components, the two cleaning heads operate simultaneously. However, for items having too short a side dimension only one head can be in operation at a time. In the exemplary embodiment a minimum spacing between frame corners is 56 cm (22 inches). In a short mode, only one corner of the frame or sash is being cleaned at any time. This is the so called short mode of machine operation. As an example, in mode 2 (table 2), a single head is used for cleaning and the same corner is repeatedly cleaned one after another of a given type of frame. In mode 5, both heads are used, that is after one corner is cleaned another corner is moved for clamping at the spaced apart head. Furthermore, in this alternating mode, the frame or sash is reoriented and again placed into the cleaning station so that all four corners are cleaned before another frame is cleaned.

**Table 3**

| Run Mode | 0 | No recognition/compensation (manual) |
|---|---|---|
| | 1 | Clamp recognition |
| | 2 | Laser recognition |
| | 3 | Clamp and laser recognition |
| | 4 | Laser compensation |
| | 5 | Compensation + clamp recognition |
| | 6 | Compensation + laser recognition |
| | 7 | Compensation + Clamp and Laser recognition |
| | 8 | Compensation & Recognition at the same time (laser + clamp recognition |
| | 9 | Reserved for compensation & recognition at the same time (laser only) |
| | 10 | Recognition Teach Mode |
| | 11 | Compensation Teach Mode |
| | 12 | Recognition and Compensation Teach Mode |

Table 3 lists different types of cleaning modes. Clamp recognition refers to determining a frame or sash profile based upon a position of the cams 347 brought into contact with the frame's inner surface. The sensor 357 monitors the position of an internal piston of the drive cylinder 352 and provides an analog output proportional to the extension of the cylinder's piston. When the cam 347 engages the frame the controller knows the contact position and hence information regarding the frame profile.

### Listing 1

Start;
Initialize servos
Move to load position
Ready to load Frame
Loading Frame
Frame Loaded, ready to run
Based on runmode, get data
Load selected program, using identified profile
Run Routine

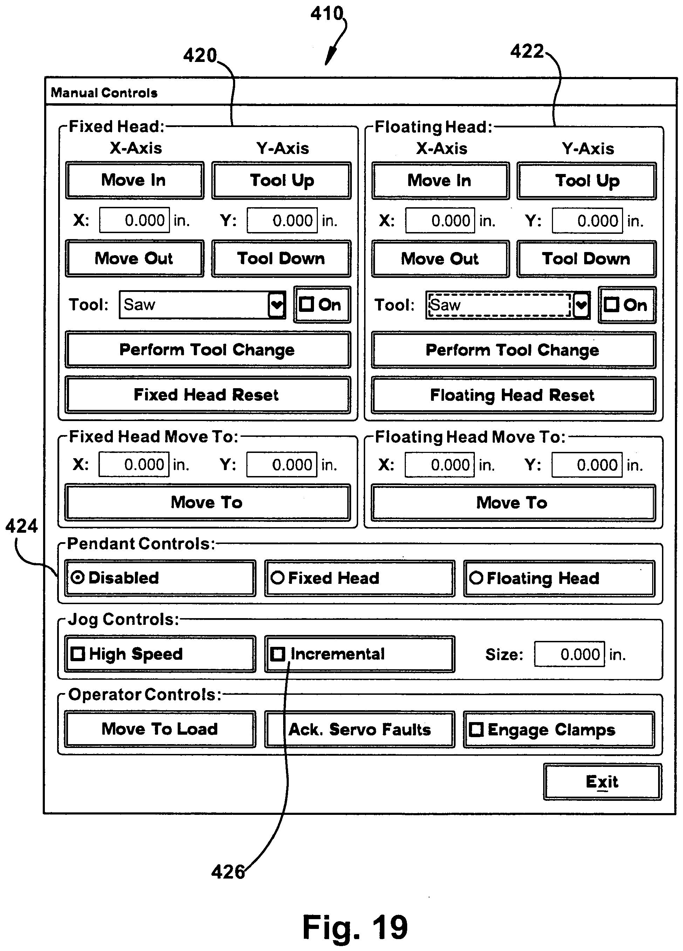

The user interface screen shots of Figures 18 and 19 are used for programming a sequence of moves of one or more tools during cleaning of a corner region and initiating the sequence of moves in response to a recognition of a profile by the sensor. In figure 19 the fixed and moveable heads 312, 314 have separate control regions 420, 422 of the touch screen for moving tools mounted to those heads in controlled paths by touching the screen. A pull down menu allows the user to select a tool and then jog that position along controlled paths by touching the screen. A so called pendant control is enabled or disabled by a button 424 which allows one, both or neither of the heads to be moved with a joystick controller that communicates inputs to the controller 35. The user interface provides a mechanism for choosing a particular tool and moving the chosen tool a specified amount with respect to a corner region of the frame.

A real time cleaning program is implemented by monitoring a profile with a sensor and as the sensor follows a travel path in relation to the frame or sash causing 110 a cleaning tool such as the saw to follow the sensor and clean a surface of the frame or sash in real time.

### Listing 2

Cleaning program selected
Program started
Bottom of frame cleaned
Inside/outside of frame cleaned
Top of frame cleaning program started
   Laser is moved outside the frame to a home
   Cleaning tool or saw is chosen for cleaning top of frame
   Head is moved toward the frame in the x-axis
   Laser starts detecting the frame, so the controller starts recording coordinates
   The head will continue to move in the x direction across the frame
   Before the tool/saw reaches the frame, the head will be positioned in the y direction
   The y axis position of the tool will be calculated based on the laser readings and position offsets between the laser and the tool/saw
   The head continues to move across the frame in the x direction at a constant rate
   The y-axis position at this stage is following the collected laser data such that the tool/saw is following the contour of the frame or sash
   The cleaning head is moved at a constant rate in the x direction while in the y direction the tool is moving up and down to allow the tool to track the profile of the frame or sash

The controller compensates for x and y position offsets between the laser sensor that is collecting frame/sash data and the tool/saw that is cleaning in close proximity the frame/sash in real time.

The disclosed window processing system has been described with a degree of particularity but it is the intent that the invention include all modifications from the disclosed design falling within the scope of the appended claims.

## Claims

1. A window processing system (10) for use in fabricating window frames or sashes (110) comprising:
a) a cleaning station (60) comprising one or more processing tools that are actuated to move relative to selected portions of a window frame or sash (110);
b) one or more non-contact sensors and one or more tactile sensors (S) for inspecting a profile of the window frame or sash (110); and
c) a controller (35) coupled to the sensors for monitoring an output from the sensors during a cleaning compensation stage to determine irregularities occurring during fabrication of the frame or sash (110) or dimensional variations differing from a nominal frame or sash size and then adjusting movement of the cleaning tools in relation to the frame or sash (110) to clean specified one or more locations of the window frame or sash based on a sensed profile of the window frame or sash (110).

2. The processing system of claim 1 wherein the controller (35) stores a plurality of predetermined profiles corresponding to a set of different window frames or sashes (110) and wherein the controller (35) compares data from the sensed profile obtained during a sensing stage with the stored, predetermined profiles during a recognition stage.

3. The processing system of claim 2 wherein the controller (35) includes a user interface for disabling the recognition stage in the event a large batch of the same window frame or sash (110) is being processed.

4. The processing system of claim 1 wherein the controller (35) includes a user interface for choosing a particular tool and moving the chosen tool along a specified path with respect to a corner region of the frame or sash during a learning stage.

5. The processing system of claim 4 wherein the controller (35) includes a user interface for adjusting an amount of incremental movement along a path of travel of a tool during the learning stage to record positions at controlled data gathering positions.

6. The processing system of claim 1 comprising a saw (70) and an additional tool wherein the saw (70) and additional tool move together in a first direction and are independently movable in a second direction transverse to the first direction in response to the controller (35).

7. The processing system of claim 1 wherein during the compensation stage the controller (35) is configured to check to determine that cleaning compensation movement adjustments do not deviate from within a range of such adjustments prior to cleaning the frame or sash (110) to verify a correct product has been inserted into the cleaning station (60).

8. The processing system of claim 1 wherein the controller (35) prioritizes specific recognition locations on a frame or sash (110) during an inspection stage based on stored data to reduce the time spent searching for a stored profile by giving the controller (35) a shorter search path.

9. The processing system of claim 1 wherein said one or more non-contact sensors comprise at least one camera (161) for taking an image of a region of interest.

10. The processing system of claim 9 further comprising a laser (160) for illuminating the frame or sash (110) in the region of interest.

11. The processing system of claim 2 wherein the controller (35) is configured to terminate the recognition stage as soon as the product is identified with a degree of certainty to avoid sensing additional locations on the profile to enhance cleaning throughput.

12. The processing system of claim 2 wherein the controller (35) is configured to calibrate the sensor during a calibration stage by lowering a sensor while it is at a region of interest by a specified distance that includes a base value and a change in the distance moved and the change in distance moved is used to scale readings obtained at that region of interest.

13. The processing system of claim 1 additionally comprising a fixed target located on a cleaning station frame used to insure that alignment of the laser has not changed and which serves as a calibration point for the analog readings of the sensor (S).

14. The system of claim 13 wherein if a sensor reading changes from a setup reading, the controller is configured to use a difference to bias current readings to compensate for the effects of changes in temperature.

15. The processing system of claim 1 wherein the cleaning station (60) comprises:
a) a frame or sash (110) support having moveable clamps for engaging the frame or sash (110) as it is positioned at the cleaning station (60) and orient the frame or sash (110) in a plane;
b) one or more cleaning saws operatively coupled to the controller (35) and mounted at corner locations of the frame or sash (110) for movement in an out to contact corner locations of the frame or sash (110) along an outer periphery of the frame or sash (110);
c) a gantry for moving the cleaning saws with respect to the frame or sash (110) during cleaning of the outer periphery of the frame or sash (110);
d) an additional tool operatively coupled to the controller (35) and for movement with respect to the frame or sash (110) having a tool head for contacting an inner periphery of the frame or sash (110).

16. A process for treating window frames made up of multiple component parts fused together at a welding station to form a closed sided frame or sash (110) comprising:
a) moving the closed sided frame or sash (110) to a cleaning station (60) having one or more moveable cleaning tools that are moved into contact with the frame or sash (110) at specified locations for cleaning selected portions of the window frame or sash (110);
b) inspecting a profile of the frame or sash (110) to determine an appropriate cleaning process to alter an appearance of said frame or sash (110) as the cleaning tools contact the frame or sash (110) wherein inspecting the profile is performed with a tactile sensor which touches a surface of the frame or sash (110) and additionally using an optical sensor which provides an optical signal relating to the surface;
c) modifying at least one path of cleaning tool movement in relation to the frame or sash (110) based on sensed profile characteristics during a cleaning compensation stage to account for irregularities occurring during fabrication of the closed sided frame or sash (110) at the welding station or material variations from a nominal frame or sash size; and
d) abrading plastic from the frame or sash by moving the one or more cleaning tools into contact with the frame or sash (110).

17. The process of claim 16 wherein a plurality of predetermined profiles corresponding to a set of different window frames or sashes (110) are stored and during a recognition stage comparing data from a sensed profile obtained while inspecting the profile with the stored profiles during a recognition stage.

18. The process of claim 16 wherein in the event the recognition stage is turned off, during a compensation stage a controller (35) checks to determine that cleaning compensation position adjustments do not deviate from within a range of such adjustments prior to cleaning the frame or sash to verify a correct product has been inserted into the cleaning station (60).

19. The process of claim 16 wherein a controller prioritizes specific recognition locations while inspecting the profile based on stored data to reduce the time spent searching for a stored profile.

20. The process of claim 16 wherein a controller auto-calibrates the sensors during a calibration stage by lowering the sensors while at a target region of the profile having known co-ordinates a specified distance.

21. The process of claim 16 additionally comprising locating a target on a cleaning station frame to align a laser used in inspecting the profile.

22. The process of claim 16 wherein the optical sensor monitors reflected optical signals directed onto the frame or sash (110) by a laser.

## Patentansprüche

1. Fensterbearbeitungssystem (10) zur Verwendung bei der Herstellung von Fensterrahmen oder -flügeln (110), welches Folgendes aufweist:
a) eine Säuberungsstation (60), welche ein oder mehrere Bearbeitungswerkzeuge aufweist, die betätigt werden, um sich relativ zu ausgewählten Teilen eines Fensterrahmens oder -flügels (110) zu bewegen;
b) einen oder mehrere kontaktlose Sensoren und einen oder mehrere Berührungssensoren (S) zum Untersuchen eines Profils des Fensterrahmens oder -flügels (110); und
c) eine Steuervorrichtung (35), die mit den Sensoren gekoppelt ist, um eine Ausgabe aus den Sensoren während einer Säuberungskompensationsstufe zu überwachen, um Unregelmäßigkeiten zu bestimmen, die während der Herstellung des Rahmens oder Flügels (110) auftreten, oder Abmessungsvariationen, die gegenüber einer nominellen Rahmen- oder Flügelgröße abweichen, und um dann eine Bewegung der Säuberungswerkzeuge bezüglich des Rahmens oder Flügels (110) einzustellen, um eine oder mehrere festgelegte Stellen des Fensterrahmens oder -flügels basierend auf einem abgefühlten Profil des Fensterrahmens oder -flügels (110) zu säubern.

2. Bearbeitungssystem nach Anspruch 1, wobei die Steuervorrichtung (35) eine Vielzahl von vorbestimmten Profilen speichert, welche einem Satz von unterschiedlichen Fensterrahmen oder -flügeln (110) entsprechen, und wobei die Steuervorrichtung (35) Daten von dem abgefühlten Profil, welches während einer Abfühlstufe erhalten wurde, mit den gespeicherten vorbestimmten Profilen während einer Erkennungsstufe vergleicht.

3. Bearbeitungssystem nach Anspruch 2, wobei die Steuervorrichtung (35) eine Anwenderschnittstelle aufweist, um die Erkennungsstufe in dem Fall auszuschalten, wenn eine große Charge des gleichen Fensterrahmens oder -flügels (110) bearbeitet wird.

4. Bearbeitungssystem nach Anspruch 1, wobei die Steuervorrichtung (35) eine Anwenderschnittstelle aufweist, um ein spezielles Werkzeug auszuwählen, und um das ausgewählte Werkzeug entlang eines festgelegten Pfades bezüglich einer Eckenregion des Rahmens oder Flügels während einer Lernstufe zu bewegen.

5. Bearbeitungssystem nach Anspruch 4, wobei die Steuervorrichtung (35) eine Anwenderschnittstelle aufweist, um eine Größe einer inkrementellen Bewegung entlang eines Laufpfades eines Werkzeugs während der Lernstufe einzustellen, um Positionen an gesteuerten Datensammelpositionen aufzuzeichnen.

6. Bearbeitungssystem nach Anspruch 1, welches eine Säge (70) und ein zusätzliches Werkzeug aufweist, wobei die Säge (70) und das zusätzliche Werkzeug sich zusammen in einer ersten Richtung bewegen und unabhängig in einer zweiten Richtung quer zur ersten Richtung ansprechend auf die Steuervorrichtung (35) bewegbar sind.

7. Bearbeitungssystem nach Anspruch 1, wobei während der Kompensationsstufe die Steuervorrichtung (35) konfiguriert ist, um eine Überprüfung vor der Säuberung des Rahmens oder Flügels (110) auszuführen, um zu bestimmen, dass Säuberungskompensationsbewegungseinstellungen nicht von innerhalb eines Bereiches solcher Einstellungen abweichen, um zu überprüfen, dass ein korrektes Produkt in die Säuberungsstation (60) eingeführt worden ist.

8. Bearbeitungssystem nach Anspruch 1, wobei die Steuervorrichtung (35) bestimmte Erkennungsstellen an einem Rahmen oder Flügel (110) während einer Untersuchungsstufe basierend auf gespeicherten Daten priorisiert, um die Zeit zu verringern, die beim Suchen nach einem gespeicherten Profil verbraucht wird, indem der Steuervorrichtung (35) ein kürzerer Suchpfad gegeben wird.

9. Bearbeitungssystem nach Anspruch 1, wobei der eine oder die mehreren kontaktlosen Sensoren zumindest eine Kamera (161) aufweisen, um ein Bild einer Region von Interesse aufzunehmen.

10. Bearbeitungssystem nach Anspruch 9, welches weiter einen Laser (160) aufweist, um den Rahmen oder Flügel (110) in der Region von Interesse zu beleuchten.

11. Bearbeitungssystem nach Anspruch 2, wobei die Steuervorrichtung (35) konfiguriert ist, um die Erkennungsstufe zu beenden, sobald das Produkt mit einem Grad an Gewissheit identifiziert ist, um das Abfühlen an zusätzlichen Stellen an dem Profil zu vermeiden, um den Säuberungsdurchsatz zu verbessern.

12. Bearbeitungssystem nach Anspruch 2, wobei die Steuervorrichtung (35) konfiguriert ist, um den Sensor während einer Kalibrierungsstufe zu kalibrieren, indem ein Sensor abgesenkt wird, während er in einer Region von Interesse ist, und zwar um eine festgelegte Distanz, die einen Basiswert und einen Änderung der bewegten Distanz bzw. Bewegungsdistanz aufweist, und wobei die Änderung der Bewegungsdistanz verwendet wird, um Auslesungen zu skalieren, die an der Region von Interesse erhalten wurden.

13. Bearbeitungssystem nach Anspruch 1, welches zusätzlich ein festes Target bzw. Ziel aufweist, das an einem Säuberungsstationsrahmen angeordnet ist, welches verwendet wird, um sicherzustellen, dass eine Ausrichtung des Lasers sich nicht verändert hat, und welches als ein Kalibrierungspunkt für die analogen Auslesungen des Sensors (S) dient.

14. System nach Anspruch 13, wobei, wenn sich eine Sensorauslesung von einer Setup- bzw. Anfangsauslesung ändert, die Steuervorrichtung konfiguriert ist, um eine Differenz zu verwenden, um gegenwärtige Auslesungen auszugleichen, um die Effekte von Temperaturänderungen zu kompensieren.

15. Bearbeitungssystem nach Anspruch 1, wobei die Säuberungsstation (60) Folgendes aufweist:
a) einen Träger für einen Rahmen oder Flügel (110), der bewegbare Klemmen hat, um in Eingriff mit dem Rahmen oder Flügel (110) zu kommen, wenn dieser an der Säuberungsstation (60) positioniert ist, und um den Rahmen oder Flügel (110) in einer Ebene zu orientieren;
b) eine oder mehrere Säuberungssägen, die betriebsmäßig mit der Steuervorrichtung (35) gekoppelt sind und an Eckenstellen des Rahmens oder Flügels (110) montiert sind, und zwar zur Bewegung in Kontakt und außer Kontakt mit Eckenstellen des Rahmens oder Flügels (110) entlang des Außenumfangs des Rahmens oder Flügels (110);
c) ein Portal zum Bewegen der Säuberungssägen bezüglich des Rahmens oder Flügels (110) während der Säuberung des Außenumfangs des Rahmens oder Flügels (110);
d) ein zusätzliches Werkzeug, welches betriebsmäßig mit der Steuervorrichtung (35) gekoppelt ist und zur Bewegung bezüglich des Rahmens oder Flügels (110) vorgesehen ist, welches einen Werkzeugkopf zum Kontakt mit einem Innenumfang des Rahmens oder Flügels (110) hat.

16. Verfahren zum Behandeln von Fensterrahmen, die aus mehreren Komponententeilen gemacht sind, die miteinander an einer Schweißstation verschweißt wurden, um einen geschlossenseitigen Rahmen oder Flügel (110) zu formen, welches Folgendes aufweist:
a) Bewegen des geschlossenseitigen Rahmens oder Flügels (110) zu einer Säuberungsstation (60) mit einem oder mehreren bewegbaren Säuberungswerkzeugen, die an festgelegten Stellen in Kontakt mit dem Rahmen oder Flügel (110) bewegt werden, um ausgewählte Teile des Fensterrahmens oder -flügels (110) zu säubern;
b) Untersuchen eines Profils des Rahmens oder Flügels (110), um ein geeignetes Säuberungsverfahren zu bestimmen, um eine Erscheinung des Rahmens oder Flügels (110) zu ändern, wenn die Säuberungswerkzeuge mit dem Rahmen oder Flügel (110) in Kontakt kommen, wobei das Untersuchen des Profils mit einem Berührungssensor ausgeführt wird, der eine Oberfläche des Rahmens oder Flügels (110) berührt, und zusätzlich unter Verwendung eines optischen Sensors, der ein optisches Signal mit Bezug zur Oberfläche liefert;
c) Modifizieren von mindestens einem Pfad der Bewegung des Säuberungswerkzeugs bezüglich des Rahmens oder Flügels (110) basierend auf abgefühlten Profilcharakteristiken während einer Säuberungskompensationsstufe, um Unregelmäßigkeiten zu berücksichtigen, die während der Fabrikation des geschlossenseitigen Rahmens oder Flügels (110) an der Schweißstation oder aufgrund von Materialveränderungen gegenüber einer nominellen Rahmen- oder Flügelgröße auftreten; und
d) Abtragen von Plastik von dem Rahmen oder Flügel durch Bewegen des einen oder der mehreren Säuberungswerkzeuge in Kontakt mit dem Rahmen oder Flügel (110).

17. Verfahren nach Anspruch 16, wobei eine Vielzahl von vorbestimmten Profilen entsprechend einem Satz von unterschiedlichen Fensterrahmen oder -flügeln (110) gespeichert sind, und wobei während einer Erkennungsstufe Daten von einem abgefühlten Profil, die bei einer Untersuchung des Profils erhalten wurden, mit den gespeicherten Profilen während einer Erkennungsstufe verglichen werden.

18. Verfahren nach Anspruch 16, wobei in dem Fall, dass die Erkennungsstufe ausgeschaltet ist, während einer Kompensationsstufe eine Steuervorrichtung (35) eine Überprüfung vor der Säuberung des Rahmens oder Flügels ausführt, um zu bestimmen, dass Säuberungskompensationspositionseinstellungen nicht von innerhalb eines Bereiches von solchen Einstellungen abweichen, um zu verifizieren, dass ein korrektes Produkt in die Säuberungsstation (60) eingeführt worden ist.

19. Verfahren nach Anspruch 16, wobei eine Steuervorrichtung festgelegte Erkennungsstellen während der Untersuchung des Profils basierend auf gespeicherten Daten priorisiert, um die Zeit zu verringern, die beim Suchen nach einem gespeicherten Profil verbraucht wird.

20. Verfahren nach Anspruch 16, wobei eine Steuervorrichtung die Sensoren während einer Kalibrierungsstufe automatisch kalbriert, und zwar durch Absenken der Sensoren um eine festgelegte Distanz, während diese an einer Target- bzw. Zielregion des Profils mit bekannten Koordinaten sind.

21. Verfahren nach Anspruch 16, welches zusätzlich aufweist, ein Target bzw. Ziel an einem Säuberungsstationsrahmen anzuordnen, um einen Laser auszurichten, der beim Untersuchen des Profils verwendet wird.

22. Verfahren nach Anspruch 16, wobei der optische Sensor reflektierte optische Signale überwacht, die durch einen Laser auf den Rahmen oder Flügel (110) geleitet wurden.

## Revendications

1. Système de traitement de fenêtre (10) destiné à être utilisé dans la fabrication de cadres ou de châssis de fenêtre (110) comprenant :
a) une station de nettoyage (60) comprenant un ou plusieurs outils de traitement qui sont actionnés pour se déplacer par rapport à des parties sélectionnées d'un cadre ou d'un châssis de fenêtre (110) ;
b) un ou plusieurs capteurs sans contact et un ou plusieurs capteurs de contact (S) pour inspecter un profil du cadre ou du châssis de fenêtre (110) ; et
c) un contrôleur (35) relié aux capteurs pour surveiller une sortie des capteurs pendant une étape de compensation de nettoyage pour déterminer des irrégularités apparaissant pendant la fabrication du cadre ou du châssis (110) ou des variations dimensionnelles par rapport à une dimension de cadre ou de châssis nominale puis pour régler le mouvement des outils de nettoyage par rapport au cadre ou au châssis (110) pour nettoyer un ou plusieurs emplacements spécifiés du cadre ou du châssis de fenêtre sur la base d'un profil détecté du cadre ou du châssis de fenêtre (110) .

2. Système de traitement selon la revendication 1, dans lequel le contrôleur (35) stocke une pluralité de profils prédéterminés correspondant à un ensemble de cadres ou de châssis de fenêtre différents (110) et dans lequel le contrôleur (35) compare des données du profil détecté obtenu pendant une étape de détection avec les profils stockés, prédéterminés pendant une étape de reconnaissance.

3. Système de traitement selon la revendication 2, dans lequel le contrôleur (35) comporte une interface utilisateur pour désactiver l'étape de reconnaissance dans le cas où un lot important du même cadre ou châssis de fenêtre (110) est en cours de traitement.

4. Système de traitement selon la revendication 1, dans lequel le contrôleur (35) comporte une interface utilisateur pour sélectionner un outil particulier et pour déplacer l'outil sélectionné le long d'un chemin spécifié par rapport à une région d'angle du cadre ou du châssis pendant une étape d'apprentissage.

5. Système de traitement selon la revendication 4, dans lequel le contrôleur (35) comporte une interface utilisateur pour régler une quantité de mouvement incrémentiel le long d'un trajet de déplacement d'un outil pendant l'étape d'apprentissage pour enregistrer des positions à des positions de collecte de données commandées.

6. Système de traitement selon la revendication 1 comprenant une scie (70) et un outil supplémentaire dans lequel la scie (70) et l'outil supplémentaire se déplacent ensemble dans une première direction et sont mobiles indépendamment dans une deuxième direction transverse par rapport à la première direction en réponse au contrôleur (35).

7. Système de traitement selon la revendication 1, dans lequel, pendant l'étape de compensation, le contrôleur (35) est configuré pour vérifier afin de déterminer que les réglages du mouvement de compensation de nettoyage ne s'écartent pas d'une plage de tels réglages avant de nettoyer le cadre ou le châssis (110) pour vérifier qu'un produit correct a été inséré dans la station de nettoyage (60).

8. Système de traitement selon la revendication 1, dans lequel le contrôleur (35) attribue une priorité à des emplacements de reconnaissance particuliers sur un cadre ou un châssis (110) pendant une étape d'inspection sur la base de données stockées pour réduire le temps passé à chercher un profil stocké en donnant au contrôleur (35) un trajet de recherche plus court.

9. Système de traitement selon la revendication 1, dans lequel les un ou plusieurs capteurs sans contact comprennent au moins une caméra (161) pour prendre une image d'une région d'intérêt.

10. Système de traitement selon la revendication 9, comprenant en outre un laser (160) pour éclairer le cadre ou le châssis (110) dans la région d'intérêt.

11. Système de traitement selon la revendication 2, dans lequel le contrôleur (35) est configuré pour mettre fin à l'étape de reconnaissance aussitôt que le produit est identifié avec un degré de certitude pour éviter de détecter des emplacements supplémentaires sur le profil pour améliorer le rendement du nettoyage.

12. Système de traitement selon la revendication 2, dans lequel le contrôleur (35) est configuré pour étalonner le capteur pendant une étape d'étalonnage en abaissant un capteur pendant qu'il est dans une région d'intérêt d'une distance spécifiée qui comporte une valeur de base et une modification de la distance parcourue et la modification de la distance parcourue est utilisée pour mettre à l'échelle les mesures obtenues dans cette région d'intérêt.

13. Système de traitement selon la revendication 1, comprenant en outre une cible fixe située sur un cadre de poste de nettoyage utilisé pour garantir que l'alignement du laser n'a pas changé et qui sert de point d' étalonnage pour les lectures analogiques du capteur (S).

14. Système de traitement selon la revendication 13, dans lequel, si une mesure d'un capteur change par rapport à une mesure de configuration, le contrôleur est configuré pour utiliser une différence pour biaiser les mesures courantes pour compenser les effets des variations de température.

15. Système de traitement selon la revendication 1, dans lequel la station de nettoyage (60) comprend :
a) un support de cadre ou de châssis (110) ayant des pinces mobiles pour engager le cadre ou le châssis (110) lorsqu'il est positionné au niveau de la station de nettoyage (60) et pour orienter le cadre ou le châssis (110) dans un plan ;
b) une ou plusieurs scies de nettoyage reliées fonctionnellement au contrôleur (35) et montées à des emplacements d'angle du cadre ou du châssis (110) pour s'approcher et s'éloigner pour contacter des emplacements d'angle du cadre ou du châssis (110) le long d'une périphérie externe du cadre ou du châssis (110) ;
c) un portique pour déplacer les scies de nettoyage par rapport au cadre ou au châssis (110) pendant le nettoyage de la périphérie externe du cadre ou du châssis (110) ;
d) un outil supplémentaire relié fonctionnellement au contrôleur (35) et pour un mouvement par rapport au cadre ou au châssis (110) ayant une tête d'outil pour entrer en contact avec une périphérie intérieure du cadre ou du châssis (110).

16. Procédé de traitement de cadres de fenêtre constitués de plusieurs composants fusionnés ensemble au niveau d'une station de soudure pour former un cadre ou un châssis à côtés fermés (110) comprenant :
a) le déplacement du cadre ou du châssis à côtés fermés (110) vers une station de nettoyage (60) ayant un ou plusieurs outils de nettoyage mobiles qui sont déplacés en contact avec le cadre ou le châssis (110) à des emplacements spécifiés pour nettoyer des parties sélectionnées du cadre ou du châssis de fenêtre (110) ;
b) l'inspection d'un profil du cadre ou du châssis (110) pour déterminer un processus de nettoyage approprié pour modifier une apparence dudit cadre ou dudit châssis (110) lorsque les outils de nettoyage entrent en contact avec le cadre ou le châssis (110) dans lequel l'inspection du profil est effectuée avec un capteur de contact qui touche une surface du cadre ou du châssis (110) et en outre à l'aide d'un capteur optique qui fournit un signal optique concernant la surface ; et
c) la modification d'au moins un trajet d'un mouvement des outils de nettoyage par rapport au cadre ou au châssis (110) sur la base de caractéristiques du profil détectées pendant une étape de compensation de nettoyage pour prendre en compte des irrégularités apparaissant pendant une fabrication du cadre ou du châssis à côtés fermés (110) au niveau du poste de soudure ou des variations de matériau par rapport à une dimension nominale du cadre ou du châssis ; et
d) l'abrasion du plastique du cadre ou du châssis en déplaçant les un ou plusieurs outils de nettoyage en contact avec le cadre ou le châssis (110).

17. Procédé selon la revendication 16, dans lequel une pluralité de profils prédéterminés correspondant à un ensemble de différents cadres ou châssis de fenêtre (110) sont stockés et pendant une étape de reconnaissance comparant des données d'un profil détecté obtenu pendant l'inspection du profil avec les profils stockés pendant une étape de reconnaissance.

18. Procédé selon la revendication 16, dans lequel, dans le cas où l'étape de reconnaissance est désactivée, pendant une étape de compensation un contrôleur (35) vérifie pour déterminer que les réglages de position de compensation de nettoyage ne s'écartent pas de l'intérieur d'une plage de tels réglages avant de nettoyer le cadre ou le châssis pour vérifier qu'un produit correct a été inséré dans la station de nettoyage (60).

19. Procédé selon la revendication 16, dans lequel un contrôleur attribue une priorité à des emplacements de reconnaissance particuliers pendant l'inspection sur la base de données stockées pour réduire le temps passé à chercher un profil stocké.

20. Procédé selon la revendication 16, dans lequel un contrôleur auto-étalonne les capteurs pendant une étape d'étalonnage en abaissant les capteurs pendant qu'ils se trouvent dans une région cible du profil ayant des coordonnées connues à une distance spécifiée.

21. Procédé selon la revendication 16, comprenant en outre le positionnement d'une cible sur un cadre de station de nettoyage pour aligner un laser utilisé pour inspecter le profil.

22. Procédé selon la revendication 16, dans lequel le capteur optique surveille des signaux optiques réfléchis dirigés sur le cadre ou le châssis (110) par un laser.
